# EUROPÄISCHE PATENTSCHRIFT

(11) **EP 3 197 701 B1**
(45) Veröffentlichungstag und Bekanntmachung des Hinweises auf die Patenterteilung: **18.12.2019**
(21) Anmeldenummer: 15766106.7
(22) Anmeldetag: 14.09.2015
(51) Int. Cl.: B60K 17/346, B60K 17/35, F16D 11/00, F16D 1/10

(54) **KUPPLUNGSANORDNUNG UND ANTRIEBSANORDNUNG MIT EINER KUPPLUNGSANORDNUNG**
CLUTCH ARRANGEMENT AND DRIVE ARRANGEMENT COMPRISING A CLUTCH ARRANGEMENT
ENSEMBLE EMBRAYAGE ET ENSEMBLE DE TRANSMISSION COMPRENANT UN ENSEMBLE EMBRAYAGE

(30) Priorität: 25.09.2014 DE 102014113937
(43) Veröffentlichungstag der Anmeldung: 02.08.2017
(73) Patentinhaber: GKN Driveline Bruneck AG, 39031 Bruneck (IT)
(72) Erfinder: MAYR, Nikolaus, I-39031 Bruneck (IT)
(74) Vertreter: Neumann Müller Oberwalleney & Partner Patentanwälte
(86) Internationale Anmeldenummer: PCT/EP2015/070972
(87) Internationale Veröffentlichungsnummer: WO 2016/046011

(56) Entgegenhaltungen:
- EP-A1- 1 016 801
- CN-U- 201 827 223
- DE-A1- 2 052 244
- DE-B3-102009 012 463
- DE-C1- 19 839 154
- US-A- 2 297 390

## Beschreibung

Die Erfindung betrifft eine Kupplungsanordnung mit einem ersten Kupplungsteil und einem zweiten Kupplungsteil, die zur Übertragung eines Drehmoments formschlüssig miteinander in Eingriff bringbar sind. Derartige Kupplungsanordungen werden beispielsweise in Antriebssträngen von mehrachsgetriebenen Kraftfahrzeugen eingesetzt, insbesondere Antriebssträngen mit einer permanent angetriebenen ersten Antriebsachse sowie einen optional zuschaltbaren zweiten Antriebsachse. Derartige Antriebskonzepte mit bedarfsweise zuschaltbarer Antriebsachse werden auch als "Hang-on", "On-demand" oder "Disconnect" -Systeme bezeichnet. Generell werden unterschiedliche Antriebskonzepte bei Kraftfahrzeugen unterschieden. So gibt es Kraftfahrzeuge mit Frontmotor, bei denen die Vorderachse permanent angetrieben wird und die Hinterachse zuschaltbar ist. Weiter gibt es Kraftfahrzeuge mit Frontmotor, bei denen die Hinterachse permanent angetrieben ist und die Vorderachse zuschaltbar ist. Schließlich sind Kraftfahrzeuge mit Heckmotor bekannt, bei denen die Hinterachse permanent angetrieben ist und die Vorderachse mittels einer Hang-on Kupplung bedarfsweise zugeschaltet wird.

Aus der gattungsgemäßen DE 10 2009 012 463 B3 ist eine Winkeltriebanordnung mit einer steuerbaren Schaltkupplung für den Antriebsstrang eines Kraftfahrzeugs bekannt. Die Schaltkupplung ist als formschlüssige Kupplung gestaltet und umfasst zwei Kupplungsteile mit Außenverzahnung, die über eine axial verschiebbare Schaltmuffe miteinander drehfest verbunden werden können. In geschlossenem Zustand wird Drehmoment auf die bedarfsweise antreibbare Antriebsachse übertragen. Bei geöffneter Kupplung ist die Drehmomentübertragung unterbrochen.

Aus der DE 10 2008 037 886 A1, entsprechend WO 2010/017882 A1, ist eine Antriebsanordnung für ein mehrachsgetriebenes Kraftfahrzeug bekannt, mit einem permanent angetriebenen ersten Antriebsstrang und einem optional antreibbaren zweiten Antriebsstrang. Der zweite Antriebsstrang umfasst eine erste Kupplung, die im Leistungspfad vor, und eine zweite Kupplung, die im Leistungspfad hinter der Längsantriebswelle angeordnet ist. Durch Öffnen der ersten und der zweiten Kupplung kann die Längsantriebswelle drehmomentfrei geschaltet werden.

Aus der DE 102 43 279 A1 ist eine Kupplung mit konischer Verzahnung einer Welle-Nabe-Verbindung zur Drehmomentübertragung zwischen einer Kurbelwelle eines Motors und einem Getriebe bekannt. Eine konische Verzahnung einer Welle wird in eine konische Verzahnung einer Nabe eingesteckt, wobei die Nabe mittels einer Feder in Richtung Welle axial beaufschlagt ist, so dass eine verdrehspielfreie kraftschlüssige Verbindung gebildet wird.

Aus der DE 10 2009 056 088 A1 ist eine Differentialanordnung mit einem Antriebsrad, einen Differentialgetriebe und einer Kupplung bekannt, die im Leistungspfad zwischen dem Antriebsrad und dem Differentialgetriebe angeordnet ist, um optional Drehmoment vom Antriebsrad auf das Differential zu übertragen. Es sind ferner ein elektromagnetischer Aktuator zum Betätigen der Kupplung, ein Sensor zur Ermittlung von Schaltstellungen der Kupplung und ein mit dem Sensor zusammenwirkendes Geberelement vorgesehen.

Aus der DE 198 04 071 A1 ist eine schaltbare Klauenkupplung mit zwei drehbar angeordneten Kupplungsteilen bekannt. Eines der Kupplungsteile ist axial verschiebbar und das andere Kupplungsteil ist axial ortsfest gehalten. Um die Belastung der Klauen beim Einkuppeln zu reduzieren, weist eines der Kupplungsteile einen Nocken auf, der stirnseitig auf einer Stützfläche des anderen Kupplungsteils abgleiten kann. In der Stützfläche ist eine Vertiefung vorgesehen, in die der Nocken in einem begrenzten Winkelbereich einrückbar ist.

Der vorliegenden Erfindung liegt die Aufgabe zugrunde, eine Kupplungsanordnung vorzuschlagen, die ein sicheres Zu- und Abschalten einer optional antreibbaren Antriebswelle gewährleistet und die sich einfach und kostengünstig herstellen lässt. Die Aufgabe besteht weiter darin, eine Antriebsanordnung mit einer solchen Kupplungsanordnung vorzuschlagen.

Eine Lösung besteht in einer Kupplungsanordnung, insbesondere zum Einsatz in einem Antriebsstrang eines Kraftfahrzeugs, umfassend: ein erstes Antriebsteil; ein zweites Antriebsteil; eine Kupplung, welche ein axial abgestütztes erstes Kupplungsteil und ein axial bewegliches zweites Kupplungsteil aufweist, wobei das zweite Kupplungsteil in eine Offenstellung bewegbar ist, in der das erste und zweite Kupplungsteil frei gegeneinander um eine Drehachse drehen können, und in ein Schließstellung, in der das erste und zweite Kupplungsteil zur Drehmomentübertragung miteinander formschlüssig in Eingriff sind; wobei ein Kupplungsprofil des zweiten Kupplungsteils und ein Antriebsteilprofil des zweiten Antriebsteils eine formschlüssige Profilverbindung bilden, derart, dass das zweite Kupplungsteil mit dem zweiten Antriebsteil drehfest und axial beweglich verbunden ist; wobei das Antriebsteilprofil des zweiten Antriebsteils zumindest eine mittlere Flankenlinie aufweist, die zwischen einer Kopflinie und einer Fußlinie des Antriebsteilprofils gebildet ist, wobei das Antriebsteilprofil derart gestaltet ist, dass die mittlere Flankenlinie bei Rotation um die Drehachse eine Rotationsfläche definiert, welche zumindest einen sich verjüngenden Teilabschnitt aufweist, wobei das Kupplungsprofil und das Antriebsteilprofil derart gestaltet sind, dass bei Drehmomentübertragung eine Axialkraft von dem zweiten Antriebsteil auf das zweite Kupplungsteil in Richtung zum ersten Kupplungsteil ausgeübt wird.

Das Kupplungsprofil ist vorzugsweise entsprechend gegengleich gestaltet, wobei insbesondere vorgesehen ist, dass eine mittlere Flankenlinie eines Kupplungsprofilelements des Kupplungsprofils bei Rotation um die Drehachse eine Rotationsfläche definiert, die sich zumindest mit einem Teilabschnitt in axialer Richtung verjüngt. Generell gilt vorliegend, dass alle für das Antriebsteilprofil beschriebenen Einzelheiten entsprechend auch für das Kupplungsprofil gelten können, und umgekehrt. Das Wort "ein" (zum Beispiel "eine mittlere Flankenlinie") wird stets als unbestimmter Artikel benutzt und soll begrifflich ein, mehrere oder alle der betreffenden Elemente umfassen. Die sich zumindest abschnittsweise verjüngende Rotationsfläche des Antriebsteilprofils, beziehungsweise die zugehörige Rotationsfläche des Kupplungsprofils, sind derart ausgerichtet, dass eine bei Drehmomentübertragung vom zweiten Antriebsteil auf das zweite Kupplungsteil wirkende Axialkraft in Schließrichtung der Kupplung wirkt.

Ein Vorteil der erfindungsgemäßen Kupplungsanordnung besteht darin, dass diese einfach und kostengünstig herstellbar ist. Dies wird durch die Ausgestaltung der Profilverbindung erreicht, deren Antriebsteilprofilelemente beziehungsweise Kupplungsprofilelemente mittlere Flankenlinien aufweisen, die auf einer Rotationsfläche liegen, welche sich in axialer Richtung verjüngt, beziehungsweise die sich im Längsschnitt betrachtet an die Drehachse annähern. Dies ermöglicht insbesondere eine umformende Fertigung der Profile, wobei gegebenenfalls auf eine spanende Nachbearbeitung verzichtet werden kann. Mit Profilverbindung ist gemeint, dass das Antriebsteil und das Kupplungsteil im Querschnitt betrachtet jeweils ein unrundes Profil aufweisen, die formschlüssig ineinander greifen. Dabei wird das Kupplungsteil axial auf das zweite Antriebsteil aufgesteckt, weswegen die zwischen den beiden Bauteilen gebildete Verbindung auch als Steckverbindung bezeichnet werden kann.

Die mittlere Flankenlinie des jeweiligen Profils ist definiert als die Linie, welche sich entlang einer Profilflanke mittig zwischen der Kopflinie und der Fußlinie des Profilelements erstreckt. Geometrisch betrachtet bildet die Flankenlinie des Wellenprofils bei Rotation eine Rotationsfläche um die Drehachse, wobei vorgesehen ist, dass der Radius zwischen der Drehachse und der Rotationsfläche in Längsrichtung variabel ist und zumindest in einem Teilabschnitt entlang des Wellenprofils in axialer Richtung abnimmt. Entsprechende Ausgestaltung gilt auch für eine Flankenlinie des Kupplungsprofils. Auf diese Weise wird bei Drehmomentübertragung zwischen dem zweiten Kupplungsteil und dem zweiten Antriebsteil eine Axialkraft in Schließrichtung der Kupplung erzeugt, so dass gegebenenfalls nötige Haltekräfte zum Halten der Kupplung in Schließstellung gering sind.

Die Profil- beziehungsweise Steckverbindung soll jede Ausgestaltung mit umfassen, die ein formschlüssiges Ineinandergreifen zur Drehmomentübertragung bei gleichzeitig axialer Beweglichkeit ermöglicht, insbesondere auch Keilwellenverbindungen, Kerbverzahnungen, Polygonprofilverbindungen sowie Kombinationen hieraus. Unabhängig von der Ausgestaltung der Profilverbindungen ist vorgesehen, dass sich das Antriebsteilprofil beziehungsweise das Kupplungsprofil in Richtung zum ersten Kupplungsteil verjüngt. Hiermit ist gemeint, dass sich die jeweils durch eine mittlere Flankenlinie gebildete Rotationsfläche in Richtung zum ersten Kupplungsteil verjüngt, was gleichbedeutend ist damit, dass die Höhe der Profilelemente in Richtung zum ersten Kupplungsteil zunimmt. Alternativ oder ergänzend ist aber auch gemeint, dass sich einzelne Profilelemente der Profilverbindung in Richtung zum ersten Kupplungsteil verjüngen.

Die Zuordnung von Außenprofil und Innenprofil zu Antriebsteil und Kupplungsteil ist generell frei wählbar. Nach einer ersten Möglichkeit umfasst das Antriebsteil das Außenprofil beziehungsweise die Außenverzahnung, während das Kupplungsteil das korrespondierende Innenprofil beziehungsweise Innenverzahnung aufweist. In diesem Fall kann das Antriebsteil beispielsweise in Form einer Antriebswelle oder eines Wellenzapfens gestaltet sein, wobei das Antriebsteilprofil dann als Wellenprofil gestaltet sein kann. Die kinematische Umkehr ist nach einer zweiten Möglichkeit ebenso denkbar, das heißt das Antriebsteil umfasst das Innenprofil, während das Kupplungsteil das Außenprofil aufweist. In diesem Fall kann das Antriebsteil beispielsweise als Hohlkörper oder Hohlrad gestaltet sein, wobei das Antriebsteilprofil dann als Nabenprofil gestaltet wäre.

Die Kupplungsprofilelemente und Antriebsteilprofilelemente sind derart gestaltet, dass bei Drehmomentübertragung eine Axialkraft von dem zweiten Antriebsteil auf das zweite Kupplungsteil in Richtung zum ersten Kupplungsteil ausgeübt wird. Durch die von der Profilverbindung im Schließsinne ausgeübte Axialkraft wird bei Drehmomentübertragung ein ungewünschtes Öffnen der Kupplung verhindert. Insbesondere ist vorgesehen, dass eine Axialkraft, welche bei Drehmomentübertragung von der Profilverzahnung im Schließsinne wirkt, größer ist als eine Axialkraft, welche bei Drehmomentübertragung gegebenenfalls von der Kupplung im Öffnungssinne wirkt.

Für die Erzeugung von Axialkraftkomponenten beziehungsweise für eine einfache Herstellbarkeit der Profilverbindung ist vorgesehen, dass zumindest eine Profilflanke eines oder mehrerer oder aller Antriebsteilprofilelemente im Zylinderschnitt durch die Profilverzahnung betrachtet mit einer Parallelen zur Drehachse einen Profilflankenwinkel einschließt, der insbesondere größer ist als 1 ° und/oder kleiner ist als 5°, wobei auch Werte von größer 5° nicht ausgeschlossen sind. Dasselbe gilt analog auch für das Kupplungsprofil, das heißt Profilflanken der Kupplungsverzahnung schließen mit einer Parallelen zur Drehachse Kupplungsflankenwinkel ein, die gegengleich zu den Profilflankenwinkeln sind. Vorzugsweise sind alle Antriebsteilprofilelemente untereinander gleich gestaltet und regelmäßig über den Umfang verteilt angeordnet. Dies gilt vorzugsweise auch für das in das Antriebsteilprofil eingreifende Kupplungsprofil.

Nach einer bevorzugten Ausgestaltung weist das erste Kupplungsteil erste Eingriffselemente auf, die in der Schließstellung der Kupplung formschlüssig in entsprechende zweite Eingriffselemente des zweiten Kupplungsteils eingreifen. Die ersten und zweiten Eingriffselemente sind an Eingriffsflächen miteinander in Kontakt, um Drehmoment zwischen den beiden Kupplungsteilen zu übertragen. Es ist insbesondere vorgesehen, dass zumindest eine der Eingriffsflächen im Zylinderschnitt durch die Eingriffselemente betrachtet mit einer die Drehachse enthaltenden Längsebene einen Eingriffsflächenwinkel einschließt. Der Eingriffsflächenwinkel ist vorzugsweise kleiner als der Profilflankenwinkel der Profilverbindung und beträgt beispielsweise 0° bis 1 °, wobei generell auch größere Winkel denkbar sind. Dadurch, dass die Profilflankenwinkel der Profilverbindung größer sind als die Eingriffsflächenwinkel der Kupplungseingriffselemente wird die Kupplung bei Drehmomentübertragung zuverlässig im Schließsinn gehalten.

Nach einer bevorzugten Ausgestaltung ist die Profilverbindung in Form einer Keilwellenverbindung (splined connection) mit ineinandergreifender Wellenverzahnung (shaft spline) und Kupplungsverzahnung (clutch spline) gestaltet, wobei die Wellenverzahnung und die Kupplungsverzahnung jeweils zumindest eine konische Teilfläche aufweisen. Die konische Teilfläche kann dabei eine Fläche sein, welche bei Rotation von den Zahnfußlinien oder Zahnkopflinien der Antriebsteilverzahnung beziehungsweise der Kupplungsverzahnung gebildet wird.

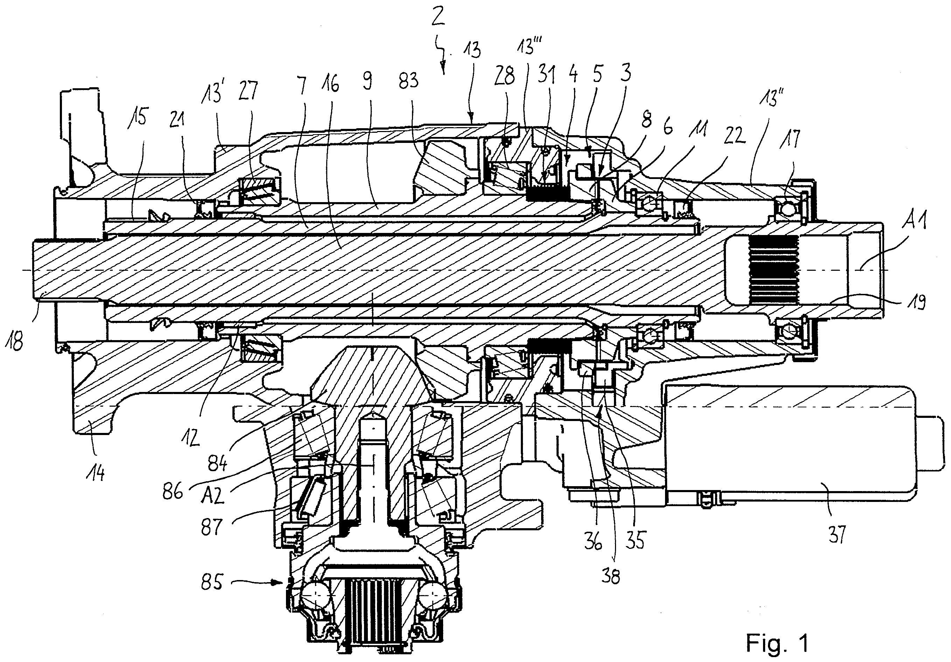

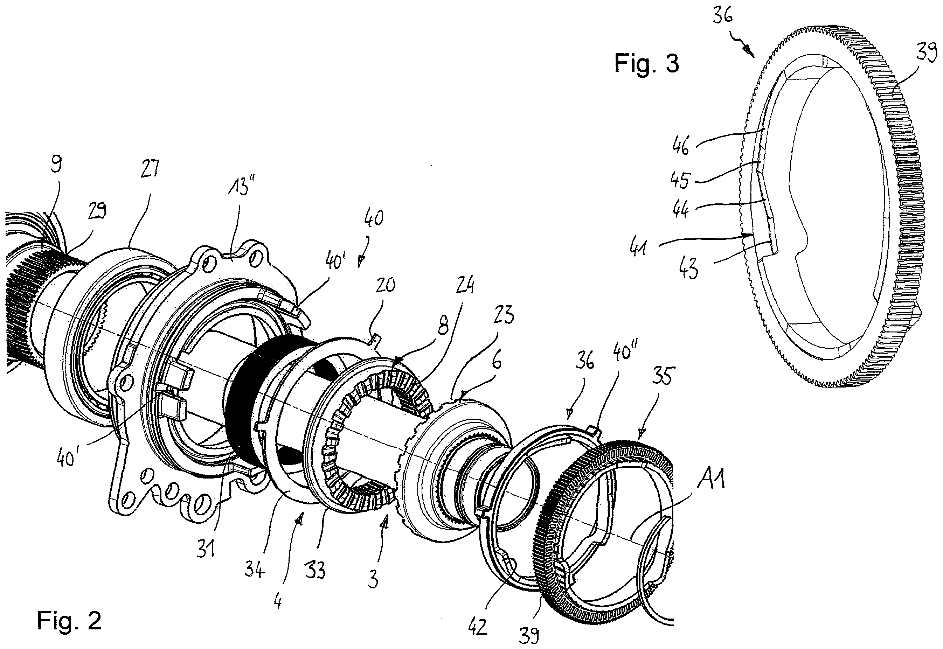

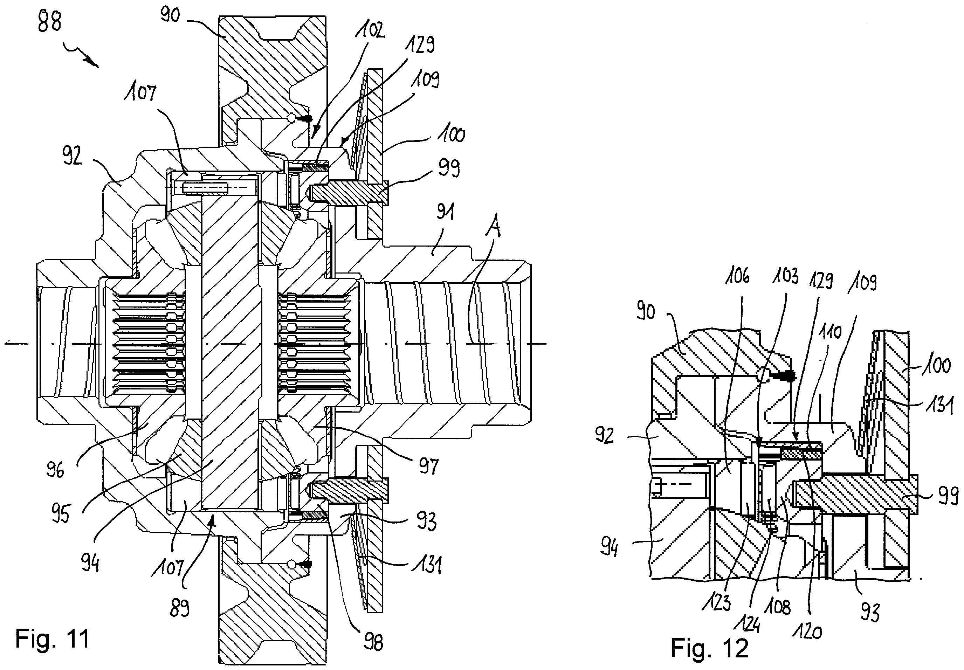

Gemäß einer ersten Ausführungsform, bei der das Antriebsteil ein Außenprofil und das Kupplungsteil das korrespondierende Innenprofil aufweist, weist das Antriebsteilprofil mehrere umfangsverteilte Profilelemente auf, für die vorzugsweise zumindest eines von Folgendem gilt: die Profilelemente haben eine variable Breite über der Länge, die in Richtung zum ersten Kupplungsteil abnimmt; die Profilelemente bilden die Zahnkopflinien des Antriebsprofils, wobei die Zahnkopflinien auf einer zylindrischen Außenfläche des zweiten Antriebsteils liegen; und/oder zwischen den Profilelementen sind Profillücken gebildet, wobei die Profillücken eine variable Tiefe über der Länge haben, die in Richtung zum ersten Kupplungsteil zunimmt. Durch die entlang des Antriebsteilprofils in Richtung zum ersten Kupplungsteil abnehmende Breite der Profilelemente nimmt die Breite der zwischen zwei benachbarten Profilelementen liegenden Profillücken entsprechend zu. Diese Ausgestaltung ermöglicht, genau wie die in Richtung erstem Kupplungsteil zunehmende Tiefe der Profillücken, eine einfache Fertigung durch Umformverfahren, da die so gebildeten konischen Flächen eine gute Entformbarkeit ermöglichen. Entsprechend gilt für die Ausgestaltung des Kupplungsprofils eines von Folgendem: die Kupplungsprofilelemente haben eine variable Breite über der Länge, die in Richtung zum ersten Kupplungsteil zunimmt; Profilkopflinien der Kupplungsprofilelemente bilden eine Kopflinienfläche, die sich in Richtung zum ersten Kupplungsteil konisch verjüngt; die Kupplungsprofilelemente haben eine variable Höhe über der Länge, die in Richtung zum ersten Kupplungsteil zunimmt. Das Kupplungsprofil und das Wellenprofil sind somit gegengleich gestaltet, so dass sie gut ineinander greifen können, wobei möglichst große Kontaktflächen miteinander zur Drehmomentübertragung in Anlage sind. (Figuren 1-10)
Gemäß einer zweiten Ausführungsform, bei der das Antriebsteil ein Innenprofil und das Kupplungsteil das korrespondierende Außenprofil aufweist, gilt für die Profilelemente des Antriebsteils zumindest eines von Folgendem: die Profilelemente haben eine variable Breite über der Länge, die in Richtung zum ersten Kupplungsteil abnimmt; die Profilelemente bilden die Zahnkopflinien des Antriebsprofils, wobei die Zahnkopflinien auf einer konischen Innenfläche des zweiten Antriebsteils liegen; zwischen den Profilelementen sind Profillücken gebildet, wobei die Profillücken eine variable Tiefe über der Länge haben, die in Richtung zum ersten Kupplungsteil zunimmt. Entsprechend gilt für die Ausgestaltung des Kupplungsprofils eines von Folgendem: die Kupplungsprofilelemente haben eine variable Breite über der Länge, die in Richtung zum ersten Kupplungsteil zunimmt; Kopflinien der Kupplungsprofilelemente bilden eine Kopflinienfläche, die sich in Richtung zum ersten Kupplungsteil konisch erweitert; die Kupplungsprofilelemente haben eine variable Höhe über der Länge, die in Richtung zum ersten Kupplungsteil abnimmt. (Figuren 11-13)
Für alle der obigen Ausgestaltungen gilt, dass das Antriebsteilprofil durch Pressumformen hergestellt werden kann. Beim Pressumformen wird eine Formmatrize mit einer dem zu erzeugenden Antriebsteilprofil entsprechenden Kontur verwendet und axial auf das Antriebsteil aufgepresst, beziehungsweise das Antriebsteil in die Formmatrize eingepresst. Alternativ kann das Antriebsteilprofil mittels Fräsen, beispielsweise Wälzfräsen, hergestellt werden. Hierfür wird die Rotationsachse des Fräswerkzeugs vorzugsweise auf einer Vorschubachse bewegt, die winklig zur Drehachse des Antriebsteils verläuft, und mit dieser beispielsweise einen Winkel von 3° bis 8° einschließt. Das erste und/oder das zweite Kupplungsteil können durch Massivumformen als präzisionsumgeformtes Bauteil hergestellt sein. Dabei kann aufgrund der gewählten Geometrie auf eine spanende Nachbearbeitung verzichtet werden.

Nach einer Ausgestaltung sind die Eingriffselemente der Kupplung als Stirnverzahnungen gestaltet, die in Schließstellung der Kupplung formschlüssig ineinander greifen. Unter Stirnverzahnung soll jede Art von Formschlusselementen umfasst sein, die in einander gegenüberliegenden Stirnflächen der beiden Kupplungsteile ausgebildet sind. Insbesondere kann es sich auch um ineinandergreifende Klauen oder eine Kronenverzahnung handeln. Für die Stirnverzahnungen gilt zumindest eines von Folgendem: Stirnzähne der Stirnverzahnung haben eine variable Breite über der Länge, die nach radial außen zunimmt; die Stirnzähne haben eine variable Höhe über der Länge, die in einem mittleren Bereich ein Maximum aufweist und die, ausgehend vom Maximum, nach radial innen und radial außen abnimmt; und/oder die Zahnflanken der Stirnzähne verlaufen schräg zu einander.

Nach einer Weiterbildung, die insbesondere für die erste Ausführungsform gilt, umfasst die Kupplungsanordnung eine Bremse, mit der das zweite Antriebsteil gegenüber einem ortsfesten Bauteil abbremsbar ist, und eine Betätigungsvorrichtung, mit der die Kupplung und die Bremse betätigbar sind. Insbesondere ist vorgesehen, dass die Betätigungsvorrichtung sowohl zum Betätigen der Kupplung als auch der Bremse dient. Ein Vorteil der Kupplungsanordnung mit integrierter Bremse ist, dass eine im Leistungspfad hinter der Kupplung liegende Antriebswelle bei geöffneter Kupplung aktiv abgebremst werden kann. Auf diese Weise können Schleppmomente und Reibungsverluste, die durch ein Drehen der Antriebswelle im lastfreien Zustand entstehen, reduziert werden. Sofern im Antriebsstrang eine Reiblamellenkupplung vorgesehen ist, kann diese durch Abbremsen der Antriebswelle schnell entölt werden, was ebenfalls Schleppmomente und Reibungsverluste vermindert.

Die Betätigungsvorrichtung kann so gestaltet sein, dass zunächst die Kupplung wenigstens teilweise oder auch vollständig geöffnet wird, und anschließend die Bremse geschlossen wird. Die Bremse kann so gestaltet sein, dass das zweite Antriebsteil vollständig gegenüber dem ortsfesten Bauteil abgebremst werden kann, das heißt nicht mehr rotiert. Das Bremsen des zweiten Antriebsteils erfolgt zumindest mittelbar gegenüber dem ortsfesten Bauteil, das heißt direkt durch Reibkontakt mit dem ortsfesten Bauteil, oder indirekt unter Zwischenschaltung ein oder mehrerer weiterer Bauteile. Das ortsfeste Bauteil kann ein Gehäuseteil der Kupplungsanordnung oder ein mit dem Gehäuse fest verbundenes Bauteil sein.

Die Betätigungsvorrichtung zum Betätigen der Kupplung, respektive zum Betätigen der Bremse kann prinzipiell beliebig gestaltet sein. Es können beispielsweise elektromotorische, elektromagnetische, hydraulische oder pneumatische Aktuatoren zum Einsatz kommen, welche von einer elektronischen Regeleinheit ansteuerbar sind. Nach einer bevorzugten Ausgestaltung ist eine einzige Betätigungsvorrichtung vorgesehen, die sowohl die Kupplung als auch die Bremse betätigt. Es versteht sich jedoch, dass prinzipiell auch separate Aktuatoren verwendbar sind.

Nach einer möglichen Ausführungsform umfasst die Betätigungsvorrichtung einen Rampenmechanismus mit einem ersten Ring, der gegenüber einem ortsfesten Bauteil axial abgestützt ist und insofern auch als Stützring bezeichnet werden kann, und mit einem zweiten Ring, der durch relative Verdrehung der beiden Ringe zueinander axial bewegbar ist und der insofern auch als Stellring bezeichnet werden kann. Relative Verdrehung zueinander bedeutet in diesem Zusammenhang, dass entweder nur einer der beiden Ringe verdreht wird, während der jeweils andere drehfest gegenüber einem ortsfesten Bauteil drehfest gehalten ist, oder dass beide Ringe relativ zueinander verdreht werden. Soweit von einer Drehrichtung die Rede ist, bezieht sich diese auf die relative Verdrehung der beiden Ringe zueinander, und zwar unabhängig davon ob nur einer oder beide Ringe verdreht werden.

Für die Ausgestaltung der Ringe kann zumindest eines von Folgendem gelten: der erste Ring ist relativ zu dem ortsfesten Bauteil mittels eines Antriebs um eine Drehachse drehend antreibbar und/oder der zweite Ring ist relativ zu dem ortsfesten Bauteil verdrehgesichert. Dies schließt insbesondere folgende Möglichkeiten mit ein: Der erste Ring ist axial abgestützt und drehend antreibbar und der zweite Ring ist axial verschiebbar und drehfest gehalten; der erste Ring ist axial abgestützt und drehfest gehalten und der zweite Ring ist axial verschiebbar und drehend antreibbar; oder der erste Ring ist axial abgestützt und der zweite Ring ist axial verschiebbar und beide Ringe sind drehend antreibbar. Der Antrieb kann prinzipiell beliebig sein, beispielsweise ein elektromotorischer, hydraulischer oder pneumatischer Antrieb.

Nach einer Ausgestaltung ist der Rampenmechanismus derart gestaltet, dass - ausgehend von einer Endposition, in der der erste Ring und der zweite Ring aneinander axial angenähert sind - durch relatives Verdrehen der beiden Ringe zueinander in einem ersten Drehbereich die Kupplung geöffnet wird, und, dass bei weiterem Verdrehen in derselben relativen Drehrichtung in einem zweiten Drehbereich die Bremse geschlossen wird. Hierfür kann zumindest einer der beiden Ringe in Umfangsrichtung eine Stellkontur mit variabler Höhe aufweisen, gegen die sich der andere Ring axial abstützt. Für eine gleichmäßige axiale Abstützung weisen der Stützring und der Stellring jeweils drei oder mehr Stellkonturen, respektive Gegenkonturen, über den Umfang auf, wobei grundsätzlich auch eine Ausführung mit ein oder zwei Konturen denkbar wäre. Stellkonturen und Gegenkonturen können sich unmittelbar aneinander axial abstützen. Die Betätigungsvorrichtung kann aber auch in Form einer Kugelrampenanordnung ausgestaltet sein. In diesem Fall weisen die beiden Ringe jeweils Kugelrillen mit variabler Tiefe in Umfangsrichtung auf, wobei in zwei einander gegenüberliegenden Kugelrillen jeweils eine Kugel angeordnet ist, über die sich die Ringe mittelbar aneinander abstützen. Alternativ kann die Betätigungsvorrichtung auch eine Rollenanordnung umfassen, wobei die beiden Ringe dann Rollflächen aufweisen können, auf denen insbesondere zylindrischen Rollkörper abgestützt sind.

Zum Öffnen und Schließen der Kupplung, respektive der Bremse, sind grundsätzlich zwei Ausgestaltungen der Betätigungsvorrichtung denkbar. Nach einer ersten Möglichkeit erfolgt das Öffnen der Kupplung, respektive Schließen der Bremse, durch relatives Verdrehen der beiden Ringe in einer ersten relativen Drehrichtung, während das Schließen der Kupplung, respektive Öffnen der Bremse, durch relatives Verdrehen der beiden Ringe in einer entgegengesetzten zweiten Drehrichtung erfolgt. Nach einer zweiten Möglichkeit erfolgt das Öffnen der Kupplung, respektive Schließen der Bremse, sowie das Schließen der Kupplung, respektive Öffnen der Bremse, durch relatives Verdrehen der beiden Ringe in ein und derselben Drehrichtung.

Die Bremse kann ein erstes Bremsenteil aufweisen, das mit dem zweiten Kupplungsteil verbunden ist, und ein zweites Bremsenteil, das an einem ortsfesten Bauteil axial abgestützt ist. Das erste Bremsenteil ist mittels der Betätigungsvorrichtung mit dem zweiten Bremsenteil in Reibkontakt bringbar, um gegenüber diesem abgebremst zu werden. Für einen besonders kompakten und einfachen Aufbau ist es günstig, wenn das erste und zweite Kupplungsteil einteilig gestaltet sind. Es versteht sich jedoch, dass die genannten Bauteile auch separat gestaltet und miteinander verbunden sein können. Zum Betätigen der Bremse wird das erste Bremsenteil gemeinsam mit dem zweiten Kupplungsteil in Richtung zum zweiten Bremsenteil beaufschlagt. Durch Reibkontakt zwischen den beiden Bremsenteilen wird das zweite Kupplungsteil und das damit verbundene zweite Antriebsteil abgebremst.

Das erneute Lösen der Bremse kann durch relatives Verdrehen des ersten Rings gegenüber dem zweiten Ring in einer entgegengesetzten Drehrichtung erfolgen, das heißt vom zweiten Drehbereich zurück in den ersten Drehbereich. In diesem Fall umfasst die Stellkontur vorzugsweise einen ersten Rampenabschnitt mit einer ersten Steigung zum Öffnen der Kupplung und einen zweiten Rampenabschnitt mit einer größeren zweiten Steigung zum Schließen der Bremse. Zwischen dem ersten und dem zweiten Rampenabschnitt kann ein Zwischenabschnitt vorgesehen sein, dessen Steigung vorzugsweise Null ist. Alternativ hierzu kann das erneute Öffnen der Bremse durch weiteres relatives Verdrehen des ersten Rings relativ zum zweiten Ring in derselben Drehrichtung, über den zweiten Drehbereich hinaus, erfolgen.

Nach einer bevorzugten Ausgestaltung, die für alle Ausführungsformen gilt, ist eine Rückstellfeder vorgesehen, für die zumindest eines von Folgendem gilt: die Rückstellfeder beaufschlagt die Bremse im Öffnungssinn und/oder die Rückstellfeder beaufschlagt die Kupplung im Schließsinn. Grundsätzlich ist jedoch auch eine umgekehrte Ausgestaltung denkbar, bei der die Rückstellfeder im Schließsinn der Bremse und/oder im Öffnungssinn der Kupplung wirksam ist. In diesem Fall würde die Betätigungsvorrichtung ebenfalls in entsprechend umgekehrter Richtung wirken, das heißt entgegen der Federkraft.

Nach einer möglichen Ausgestaltung kann die Kupplungsanordnung auch einen Winkeltrieb umfassen beziehungsweise Teil einer Winkeltriebanordnung sein, die auch als PTU (Power Take-off Unit) bezeichnet wird. Der Winkeltrieb umfasst ein Tellerrad und ein Kegelrad, die zur Drehmomentübertragung miteinander in Verzahnungseingriff sind, wobei das zweite Antriebsteil mit dem Tellerrad fest verbunden und koaxial zum ersten Antriebsteil drehbar gelagert ist.

Nach einer Ausführungsform kann das zweite Antriebsteil in Form eines Differentialgehäuses gestaltet sein, das von einem Antriebsrad um die Drehachse drehend antreibbar ist, und das erste Antriebsteil kann in Form eines Differentialträgers gestaltet sein, der in dem Differentialgehäuse um die Drehachse drehbar angeordnet ist; wobei die Kupplung im Leistungspfad zwischen dem Differentialgehäuse und dem Differentialträger angeordnet ist, so dass eine Drehmomentübertragung vom Differentialgehäuse auf den Differentialträger wahlweise hergestellt oder unterbrochen werden kann; wobei das erste Kupplungsteil der Kupplung mit dem Differentialträger fest verbunden ist und das zweite Kupplungsteil der Kupplung relativ zum Differentialgehäuse drehfest und axial beweglich gehalten ist; wobei eine Betätigungsvorrichtung zum Betätigen der Kupplung vorgesehen ist. Bei dieser Ausführungsform kann ferner vorgesehen sein, dass das zweite Kupplungsteil einen Ringabschnitt aufweist, der in dem Differentialgehäuse angeordnet ist, und mehrere Verbindungselemente, die sich axial von dem Ringabschnitt durch Öffnungen im Differentialgehäuse nach außen hindurcherstrecken, wobei das Kupplungsprofil an einer Außenumfangsfläche des zweiten Kupplungsteils gebildet ist, und wobei das Antriebsteilprofil an einer Innenumfangsfläche des Differentialgehäuses gebildet ist. (Figuren 11-13)
Die Aufgabe wird ferner gelöst durch eine Antriebsstranganordnung für ein Kraftfahrzeug, umfassend: einen permanent antreibbaren ersten Antriebsstrang mit einer ersten Antriebsachse; einen optional antreibbaren zweiten Antriebsstrang mit einer zweiten Antriebsachse; wobei der zweite Antriebsstrang eine erste Kupplungsanordnung, eine zweite Kupplungsanordnung und eine Antriebswelle umfasst, die im Leistungspfad zwischen der ersten und der zweiten Kupplungsanordnung angeordnet ist; wobei zumindest eine von der ersten und der zweiten Kupplungsanordnungen eine oder mehrere der oben genannten Ausgestaltungen hat. In geschlossener Position der ersten und zweiten Kupplung überträgt die Antriebswelle Drehmoment auf die zweite Antriebsachse. Ein Vorteil des Antriebsstranges ist, dass die zwischen der ersten und der zweiten Kupplungsanordnung liegende Antriebswelle in geöffnetem Zustand der beiden Kupplungen komplett abschaltbar ist, was zu einer Reduktion von ungewünschten Reibungsverlusten führt. Die erfindungsgemäße Ausgestaltung der Profilverbindung bewirkt eine einfache Fertigung und Montage und kann aufgrund der erzeugten Axialkräfte ein ungewünschtes Öffnen der Kupplung verhindern.

Die Antriebstranganordnung kann ein Verteilergetriebe umfassen, das von einer Antriebseinheit eingeleitetes Drehmoment auf den ersten und zweiten Antriebsstrang verteilt, wobei der erste Antriebsstrang permanent mit dem Verteilergetriebe antriebsverbunden ist, um Drehmoment auf die erste Antriebsachse zu übertragen, und der zweite Antriebsstrang mit dem Verteilergetriebe optional antriebsverbindbar ist, um bei Bedarf Drehmoment auf die zweite Antriebsachse zu übertragen. Die Antriebswelle kann eine Längsantriebswelle sein, die im Drehmomentfluss zwischen dem Verteilergetriebe und der zweiten Antriebsachse angeordnet ist. Die erste Kupplungsanordnung kann im Leistungspfad zwischen dem Verteilergetriebe und der Längsantriebswelle angeordnet sein und die zweite Kupplungsanordnung kann im Leistungspfad zwischen der Längsantriebswelle und dem Hinterachsdifferential angeordnet sein. Die erste und/oder zweite Kupplungsanordnung können nach einer oder mehreren der oben genannten Ausgestaltungen ausgeführt sein.

Bevorzugte Ausführungsbeispiele werden nachstehend anhand der Zeichnungsfiguren erläutert. Hierin zeigt:
- Figur 1: eine erfindungsgemäße Kupplungsanordnung in einer ersten Ausführungsform im Längsschnitt;
- Figur 2: die Kupplungsanordnung gemäß Figur 1 in Explosionsdarstellung in dreidimensionaler Ansicht;
- Figur 3: den ersten Ring der Kupplungsanordnung aus Figur 1 als Detail in perspektivischer Ansicht;
- Figur 4: das Detail A der Kupplungsanordnung gemäß Figur 1;
- Figur 5: das zweite Kupplungsteil der Kupplungsanordnung gemäß Figur 1
A) in dreidimensionaler Darstellung;
B) in Axialansicht;
C) gemäß Schnittlinie C-C aus Figur 5B);
D) gemäß Schnittlinie D-D aus Figur 5B);
E) gemäß Schnittlinie E-E aus Figur 5B);
- Figur 6: ein Detail des zweiten Antriebsteils der Kupplungsanordnung gemäß Figur 1 in dreidimensionaler Darstellung;
- Figur 7: schematisch ein mögliches Fertigungsverfahren zur Erzeugung eines Wellenprofils in einem der Antriebsteile der Kupplungsanordnung gemäß Figur 1 in Seitenansicht;
- Figur 8: schematisch die Kupplungsanordnung gemäß Figur 1 in einer ersten Schaltstellung;
- Figur 9: schematisch die Kupplungsanordnung gemäß Figur 1 in einer zweiten Schaltstellung;
- Figur 10: schematisch die Kupplungsanordnung gemäß Figur 1 in einer dritten Schaltstellung;
- Figur 11: eine erfindungsgemäße Kupplungsanordnung in einer weiteren Ausführungsform im Längsschnitt;
- Figur 12: die Kupplung gemäß der Kupplungsanordnung aus Figur 11 als Detail;
- Figur 13: die Profilverbindung der Kupplungsanordnung aus Figur 11 als Detail;
- Figur 14: ein Detail des zweiten Kupplungsteils der Kupplungsanordnung gemäß Figur 11 in dreidimensionaler Darstellung;
- Figur 15: schematisch ein mögliches Fertigungsverfahren zur Erzeugung eines Kupplungsprofils für die Kupplungsanordnung gemäß Figur 11 in Seitenansicht;
- Figur 16: eine erfindungsgemäße Antriebsstranganordnung mit einer erfindungsgemäßen Kupplungsanordnung gemäß den Figuren 1 bis 10, respektive gemäß den Figuren 11 bis 15.

Die Figuren 1 bis 10 werden nachstehend gemeinsam beschrieben. Es ist eine erfindungsgemäße Kupplungsanordnung 2 gezeigt. Die Kupplungsanordnung 2 dient zum Einsatz im Antriebsstrang eines Kraftfahrzeuges, um eine Antriebsachse des Kraftfahrzeuges optional anzutreiben. Insbesondere kann die Kupplungsanordnung 2 für ein mehrachsgetriebenes Kraftfahrzeug verwendet werden, das eine permanent angetriebene primäre Antriebsachse und eine optional antreibbare sekundäre Antriebsachse aufweist.

Die Kupplungsanordnung 2 umfasst eine Kupplung 3, mit der eine Drehmomentübertragung im Antriebsstrang optional hergestellt oder unterbrochen werden kann, eine Bremse 4, mit der ein Teil des Antriebsstrangs bei geöffneter Kupplung 3 gegenüber einem ortsfesten Bauteil abbremsbar ist, sowie eine Betätigungsvorrichtung 5, mit der die Kupplung 3 und die Bremse 4 betätigbar sind. Dabei ist insbesondere vorgesehen, dass die Betätigungsvorrichtung 5 so gestaltet ist, dass die Kupplung 3 und die Bremse 4 in Abhängigkeit voneinander betätigt werden, worauf weiter unten noch näher eingegangen wird.

Die Kupplung 3 umfasst ein erstes Kupplungsteil 6, welches mit einem ersten Antriebsteil 7 drehfest verbunden ist, sowie ein zweites Kupplungsteil 8, das mit einem zweiten Antriebsteil 9 drehfest verbunden ist. Das erste und das zweite Antriebsteil 7, 9 sind vorliegend in Form von Antriebswellen gestaltet und werden insofern auch als solche bezeichnet. Es versteht sich jedoch, dass die Antriebsteile 7, 9 auch anders ausgestaltet sein können, beispielsweise als Antriebsrad oder Antriebskranz. Mittels der Betätigungsvorrichtung 5 können das erste Kupplungsteil 6 und das zweite Kupplungsteil 8 zur Übertragung eines Drehmoments in Eingriff miteinander gebracht werden, oder voneinander entkoppelt werden, sodass eine Drehmomentübertragung unterbrochen ist. Das erste Antriebsteil 7 ist als Hohlwelle gestaltet und mittels zweier Lager 11, 12 relativ zu einem ortsfesten Gehäuse 13 um eine Drehachse A drehbar gelagert. Das Gehäuse 13 hat einen Verbindungsabschnitt 14 zum Anschließen an ein weiteres Bauteil des Antriebsstrangs, insbesondere ein Getriebe. Zur Einleitung eines Drehmoments in die erste Antriebswelle 7 hat diese eine entsprechende Keilwellenverzahnung 15, welche in eine entsprechende Gegenverzahnung drehfest eingreifen kann. Koaxial innerhalb der ersten Antriebswelle 7 ist eine Durchtriebswelle 16 angeordnet, die relativ zur ersten Antriebswelle 7 um die Drehachse A drehbar ist und mittels eines weiteren Lagers 17 gegenüber dem stehenden Gehäuse 13 drehbar gelagert ist. Die Durchtriebswelle 16 hat an ihrem ersten Ende 18 eine Wellenverzahnung zum antriebsmäßigen Verbinden mit einem Anschlussbauteil und an ihrem entgegengesetzten zweiten Ende 19 eine Nabenverzahnung zum antriebsmäßigen Verbinden eines weiteren hiermit zu verbindenden Antriebsbauteils. Die Abdichtung des zwischen der ersten Antriebswelle 7 und dem Gehäuse 13 gebildeten Ringraums erfolgt über eine erste Dichtung 21 am ersten Ende der Antriebswelle 7 und eine zweite Dichtung 22 am zweiten Ende der Antriebswelle 7.

Die Kupplung 3 ist als formschlüssige Kupplung gestaltet, wobei das erste Kupplungsteil 6 erste Eingriffselemente 23 aufweist, die mit gegengleichen Eingriffselementen 24 des zweiten Kupplungsteils 8 formschlüssig in Eingriff bringbar sind. Die ersten und zweiten Eingriffselemente 23, 24 sind nach Art einer Stirnverzahnung gestaltet. Insofern kann die Kupplung 3 auch als Zahn- oder Klauenkupplung bezeichnet werden. Es versteht sich jedoch, dass auch andere Arten von Kupplungen verwendbar sind, die eine Drehmomentübertragung wahlweise herstellen oder unterbrechen können.

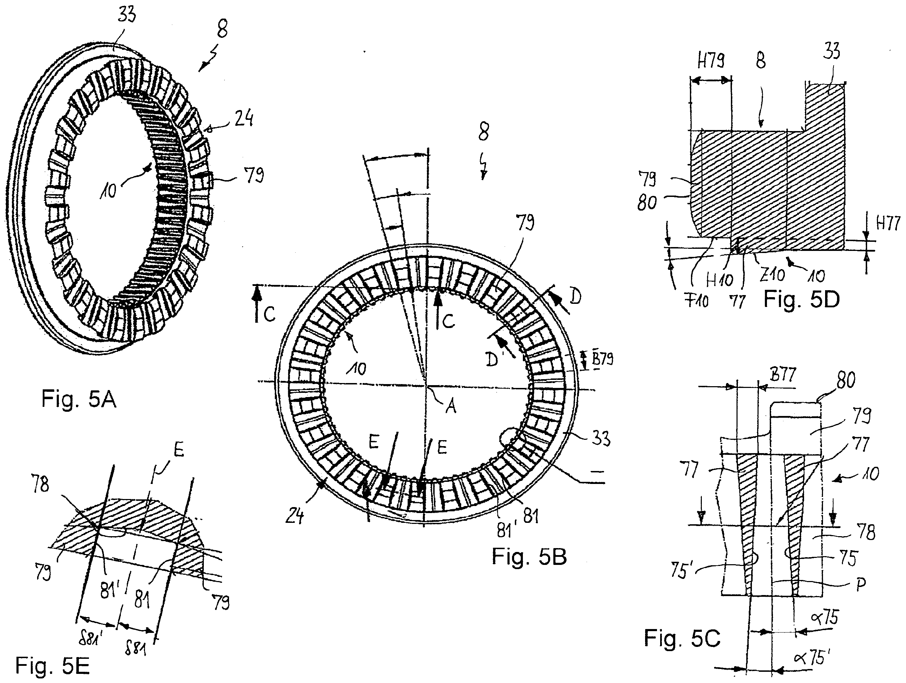

Die ersten und zweiten Eingriffselemente 23, 24 kontaktieren einander in Umfangsrichtung mit seitlichen Eingriffsflächen, die auch als Kontaktflächen bezeichnet werden können, so dass Drehmoment zwischen den beiden Kupplungsteilen 6, 8 übertragen werden kann. Wie insbesondere aus Figur 5E) hervorgeht, verlaufen die Kontaktflächen im Zylinderschnitt durch die Eingriffselemente 23, 24 betrachtet parallel zu einer die Drehachse A enthaltenden Längsebene EL oder schließen mit dieser einen kleinen Kontaktflächenwinkel δ81, δ81' ein, das heißt der Kontaktflächenwinkel δ81, δ81' beträgt vorzugsweise mindestens 0° und maximal 2°, und kann insbesondere zwischen 1 ° und 2° liegen.

Das erste Kupplungsteil 6 ist über das Lager 11 an dem ortsfesten Gehäuse 13 axial abgestützt und über eine Wellenverbindung 25 mit der ersten Antriebswelle 7 drehfest verbunden. Ein Sicherungsring 26 sichert das erste Kupplungsteil 6 in entgegengesetzter axialer Richtung auf der ersten Antriebswelle 7.

Das zweite Kupplungsteil 8 ist mit dem zweiten Antriebsteil 9, respektive Antriebswelle, drehfest und axial bewegbar verbunden. Die zweite Antriebswelle 9 ist mittels der Lager 27, 28 um die Drehachse A in dem Gehäuse 13 drehbar gelagert. Eine axiale Abstützung der zweiten Welle 9 erfolgt über das zweite Lager 27 in das Gehäuse 13. Die drehfeste Verbindung zwischen dem zweiten Kupplungsteil 8 und der zweiten Antriebswelle 9 erfolgt über eine Profilverbindung 29, auf die weiter unten noch näher eingegangen wird, wobei das zweite Kupplungsteil 8 relativ zur zweiten Antriebswelle 9 axial bewegbar ist. Das zweite Kupplungsteil 8 ist über Federmittel 31 mittelbar am ortsfesten Gehäuse 13 axial abgestützt. Mittelbar insofern, als sich die Federmittel 31 an einer Stützfläche 32 der zweiten Antriebswelle 9 abstützen, welche wiederum über das Lager 27 im Gehäuse 13 axial abgestützt ist. Die Federmittel 31 sind mit axialer Vorspannung verbaut und beaufschlagen das zweite Kupplungsteil 8 im Schließsinne der Kupplung 3. Sie wirken der Betätigungskraft der Betätigungsvorrichtung 5 entgegen, so dass sie auch als Rückstellfeder 31 bezeichnet werden kann. Die Federmittel 31 sind vorliegend als Spiralfeder aus Bandmaterial gestaltet, wobei auch andere Arten von Federn, wie ein aus Tellerfedern zusammengesetztes Federpaket, einsetzbar wären.

Im Folgenden wird näher auf die Besonderheit der Profilverbindung 29 zwischen dem zweiten Kupplungsteil 8 und der zweiten Antriebswelle 9 eingegangen. Die Profilverbindung 29 umfasst ein am zweiten Kupplungsteil 8 vorgesehenes inneres Kupplungsprofil 10 und ein an der zweiten Antriebswelle 9 ausgebildetes äußeres Wellenprofil 20, die formschlüssig ineinander greifen. Das Kupplungsprofil 10 ist in Form einer Verzahnung gestaltet, die auch als Kupplungsverzahnung bezeichnet wird; das Wellenprofil 20 ist in Form einer korrespondierenden Verzahnung gestaltet, die auch als Wellenverzahnung bezeichnet wird. Die Kupplungsverzahnung 10 und die Wellenverzahnung 20 haben jeweils eine Verzahnungshöhe H10, H20, welche im Querschnitt definiert ist durch den Abstand zwischen einem Kopfkreisradius und einem Fußkreisradius der jeweiligen Verzahnung. Es ist vorgesehen, dass die Verzahnungshöhe H10 der Kupplungsverzahnung 10 und die Verzahnungshöhe H20 der Wellenverzahnung, zumindest über einen Teilabschnitt der jeweiligen Verzahnung, in Richtung zum ersten Kupplungsteil 6 zunimmt. Hiermit ist gemeint, dass die mittleren Flankenlinien L20, L20' der jeweiligen Verzahnung 10, 20 bei Rotation in jedem Fall einen konischen Flächenabschnitt aufweisen und gegebenenfalls einen daran anschließenden zylindrischen Flächenabschnitt aufweisen können. Zumindest eine der Verzahnungen 10, 20 ist vorzugsweise so gestaltet, dass sich der konische Flächenabschnitt der erzeugenden Flankenlinie L20, L20' zumindest über die Hälfte der Gesamtlänge der Verzahnung erstreckt.

Die Profilverbindung 29 ist derart gestaltet, dass bei Drehmomentübertragung eine Axialkraft von dem zweiten Antriebsteil 9 auf das zweite Kupplungsteil 8 in Richtung zum ersten Kupplungsteil 6 ausgeübt wird. Durch die von der Profilverbindung 29 im Schließsinne ausgeübte Axialkraft wird bei Drehmomentübertragung ein ungewünschtes Öffnen der Kupplung 3 verhindert. Insbesondere ist vorgesehen, dass die Axialkraft, welche bei Drehmomentübertragung von der Profilverzahnung 29 im Schließsinne bewirkt wird, größer ist als eine Axialkraft, welche bei Drehmomentübertragung gegebenenfalls von der Kupplung 3 im Öffnungssinne wirkt.

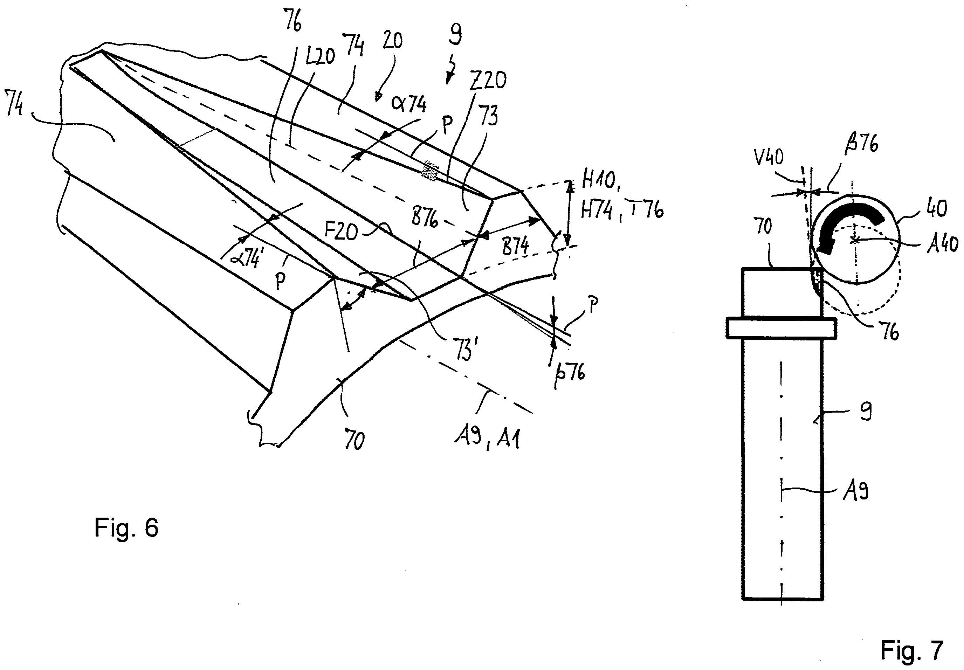

Es ist insbesondere in Figur 6 erkennbar, dass Zahnflanken 73, 73' der Wellenzähne 74 in Radialansicht betrachtet mit einer Parallelen P zur Drehachse A jeweils einen Zahnflankenwinkel a74 einschließen, der insbesondere größer als 1 ° und kleiner als 5° ist und vorliegend etwa 3° beträgt. Dasselbe gilt analog auch für die Kupplungsverzahnung 10, das heißt im Zylinderschnitt betrachtet schließen Zahnflanken 75, 75' der Kupplungsverzahnung 10 mit einer Parallelen P zur Drehachse A entsprechende Zahnflankenwinkel α75, α75' ein, die gleich groß sind wie die Zahnflankenwinkel a74, a74' der Wellenverzahnung 20. In einer Abwandlung der gezeigten Ausführungsform können die Zahnflankenwinkel α75, α75' der Kupplungsverzahnung 10 auch unterschiedlich groß sein. Dies gilt entsprechend auch für die Zahnflankenwinkel a74, a74' der Wellenzähne 74.

Insgesamt ist vorgesehen, dass die Zahnflankenwinkel a74, a75 der Verzahnungsverbindung 29 zwischen zweitem Kupplungsteil 8 und Antriebswelle 9 größer ist als die Kontaktflächenwinkel der Kupplungsverzahnung 23, 24. Auf diese Weise wird die Kupplung 3 bei Drehmomentübertragung im Schließsinn gehalten.

Es ist in Figur 6 ferner erkennbar, dass die Zähne 74 der Wellenverzahnung 20 eine variable Breite B74 über ihrer Länge aufweisen, die in Richtung zum freien Ende 70 der Antriebswelle 9 beziehungsweise zum ersten Kupplungsteil 6 abnimmt. Die Zahnkopflinien Z20 der Wellenverzahnung 20 liegen auf einer zylindrischen Fläche, welche die Außenfläche der zweiten Antriebswelle 9 bildet. Es ist jedoch auch denkbar, dass die Außenfläche der zweiten Antriebswelle 9 zumindest in einem Teil des Verzahnungsabschnitts konisch gestaltet ist. Zwischen jeweils zwei in Umfangsrichtung benachbarten Wellenzähnen 74 ist jeweils eine Zahnlücke 76 gebildet. Die Zahnlücken 76 haben eine in Richtung zum freien Wellenende 70 eine zunehmende Tiefe T76, welche der Zahnhöhe H74 entspricht. Durch die entlang der Wellenverzahnung 20 in Richtung zum ersten Kupplungsteil 6 abnehmende Breite B74 der Zähne 74 nimmt die Breite B76 der zwischen zwei benachbarten Zähnen liegenden Zahnlücken 76 entsprechend zu. Diese Ausgestaltung ermöglicht, genau wie die in Richtung erstem Kupplungsteil 6 zunehmende Tiefe T76 der Zahnlücken 76, eine Fertigung der Verzahnung im Wege eines Umformverfahrens, insbesondere eines Pressumformens wobei auf eine spanende Nachbearbeitung gegebenenfalls verzichtet werden kann.

Alternativ kann die Wellenverzahnung 20 auch mittels Fräsen hergestellt werden, die in Figur 7 dargestellt. Zur Erzeugung der in Richtung freiem Wellenende 70 in der Tiefe und Breite zunehmenden Zahnlücken 76 kann die Rotationsachse des Fräswerkzeugs 40 auf einer Vorschubachse A40 bewegt, die winklig zur Drehachse A des zweiten Antriebsteils 9 verläuft. Der zwischen der Vorschubachse V40 und der Drehachse A des Antriebsteils 9 eingeschlossene Winkel β76 definiert den Verlauf der Zahnfußlinien F20 entlang der Länge der Verzahnung 20. Diese nähert sich in Richtung zum freien Ende 70 der Drehachse A an.

Die Kupplungsverzahnung 10 ist zum formschlüssigen Eingriff gegengleich zur Wellenverzahnung 20 gestaltet. Dabei haben die Kupplungszähne 77 eine variable Breite B77 über der Länge, die in Richtung zum ersten Kupplungsteil 6 zunimmt. Weiter nimmt die Höhe H77 der Kupplungszähne 77 in Richtung zum ersten Kupplungsteil 6 zu. Dabei ist die Zahnhöhe H77 definiert als Abstand zwischen der Zahnkopflinie Z10 und der Zahnfußlinie F10, jeweils im Querschnitt durch die Verzahnung betrachtet. Die Zahnkopflinien Z10 der Kupplungszähne 77 bilden eine Kopflinienfläche oder Rotationsfläche, die sich mit einem Endabschnitt in Richtung zum ersten Kupplungsteil 6 konisch verjüngt.

Das zweite Kupplungsteil 8 kann mittels Massivumformen als präzisionsumgeformtes Bauteil hergestellt werden. Dabei kann aufgrund der gewählten Geometrie auf eine spanende Nachbearbeitung verzichtet werden.

Wie insbesondere in Figur 5B erkennbar, haben die Stirnzähne 79 der Stirnverzahnung 24 des zweiten Kupplungsteils 8 eine variable Breite B79 über der Länge, die von radial innen nach radial außen zunimmt. Die Stirnzähne 79 haben ferner eine variable Höhe H79 über der Länge, die in einem mittleren Abschnitt 80 ein Maximum aufweist und die, ausgehend vom Maximum, nach radial innen und radial außen abnimmt. Die Stirnverzahnung 23 des ersten Kupplungsteils 6 ist entsprechend gegengleich gestaltet.

Die Bremse 4 umfasst ein erstes Bremsenteil 33, das mit dem zweiten Kupplungsteil 8 fest verbunden ist, sowie ein zweites Bremsenteil 34, das gegenüber dem ortsfesten Gehäuse 13 drehfest verbunden oder verbindbar ist. Durch axiales Beaufschlagen des zweiten Kupplungsteils 8 in Richtung vom ersten Kupplungsteil 6 weg, wird das mit dem zweiten Kupplungsteil 8 verbundene und gemeinsam mit diesem rotierende Bremsenteil 33 gegen das ortsfeste Bremsenteil 34 beaufschlagt. Durch den Reibschluss zwischen den Bremsenteilen 33, 34 wird das erste Bremsenteil 33 bis zum Stillstand verzögert. Somit stehen alle mit dem Bremsenbauteil 33 antriebsverbundenen Teile des Antriebsstranges still.

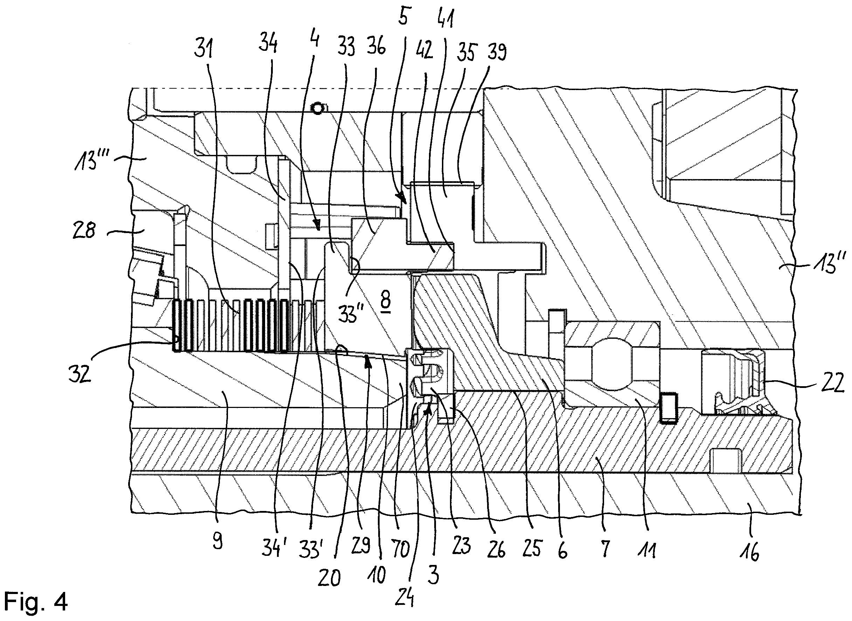

Das erste Bremsenteil 33 ist insbesondere einteilig mit dem zweiten Kupplungsteil 8 gestaltet, was sich günstig auf die Herstellung und Montage auswirkt. Das zweite Bremsenteil 34 ist in Form einer Brems- oder Reibscheibe gestaltet, die gegenüber dem Gehäuse 13 drehfest gehalten und axial abgestützt ist. Bei geschlossener Bremse 4 ist die Kupplung 3 geöffnet, so dass der mit dem zweiten Kupplungsteil 8 antriebsverbundene Teil des Antriebsstrangs vom ersten Kupplungsteil 6 abgekoppelt ist. In geschlossenem Zustand der Kupplung 3 ist die Bremse 4 gelöst, so dass das zweite Kupplungsteil 8 und alle hiermit antriebsverbundenen Bauteile frei drehen können. Es ist erkennbar, dass die Federmittel 31 die Bremse 4 im Öffnungssinne und die Kupplung 3 im Schließsinne beaufschlagen. Das Betätigen der Kupplung 3 bzw. der Bremse 4 erfolgt mittels der Betätigungsvorrichtung 5, auf die im Folgenden unter besonderer Bezugnahme auf die Figuren 4 bis 6 näher eingegangen wird.

Die Betätigungsvorrichtung 5 umfasst einen ersten Ring 35, der gegenüber dem Gehäuse 13 axial abgestützt ist und insofern auch als Stützring bezeichnet werden kann, sowie einen zweiten Ring 36, der bei relativer Verdrehung der beiden Ringe 35, 36 zueinander axial bewegbar ist. Zur relativen Verdrehung der beiden Ringe 35, 36 ist ein elektromotorischer Antrieb 37 und ein Rädergetriebe 38 vorgesehen, wobei auch andere Antriebe wie hydraulische, pneumatische oder elektromagnetische denkbar sind. Das Rädergetriebe 38 umfasst ein Ritzel 30, das vom Elektromotor 37 drehend antreibbar ist und in eine entsprechende Außenverzahnung 39 des ersten Rings 35 eingreift. Der zweite Ring 36 weist Verdrehsicherungsmittel 41 auf, mit denen er drehfest in dem Gehäuse 13 aufgenommen ist. Hierfür sind an dem Gehäuse 13 Längsnuten 42 ausgebildet, in denen die Verdrehsicherungsmittel 41 längsverschiebbar geführt sind.

Der erste Ring 35 und der zweite Ring 36 bilden gemeinsam einen Rampenmechanismus, der so gestaltet ist, dass - ausgehend von einer Endposition, in welcher der zweite Ring 36 an den ersten Ring 35 axial angenähert ist - der zweite Ring 36 durch relatives Verdrehen des ersten Rings 35 axial von dem ersten Ring 35 weg bewegt wird. Hierfür haben der erste und der zweite Ring 35, 36 entsprechende Stellkonturen 41, 42, mit denen sie axial aneinander abgestützt sind. Die Stellkonturen 41, 42 haben in Umfangsrichtung betrachtet eine variable Höhe, so dass ein relatives Verdrehen der beiden Ringe 35, 36 zueinander in eine Axialbewegung des zweiten Rings 36 umgewandelt wird. Die Stellkonturen 41 des ersten Rings 35 weisen jeweils, ausgehend von einem Abschnitt 43 mit größter Tiefe, bei Drehung in der ersten Drehrichtung R1 zunächst einen ersten Rampenabschnitt 44 mit größerer Steigung, einen sich hieran in Umfangsrichtung anschließenden steigungslosen Zwischenabschnitt 45 und einen sich hieran anschließenden zweiten Rampenabschnitt 46 auf. Der Umfangswinkel des ersten Rampenabschnitts 44 ist kleiner als der Umfangswinkel des zweiten Rampenabschnitts 46. Durch diese Kontur erfolgt bei Drehung der ersten Scheibe 35 in Richtung R1 zunächst eine verhältnismäßig schnelle axiale Bewegung der zweiten Scheibe 36 in Richtung Bremse 4, wenn das Stützelement 42 entlang des ersten Steigungsabschnitts 44 wandert.

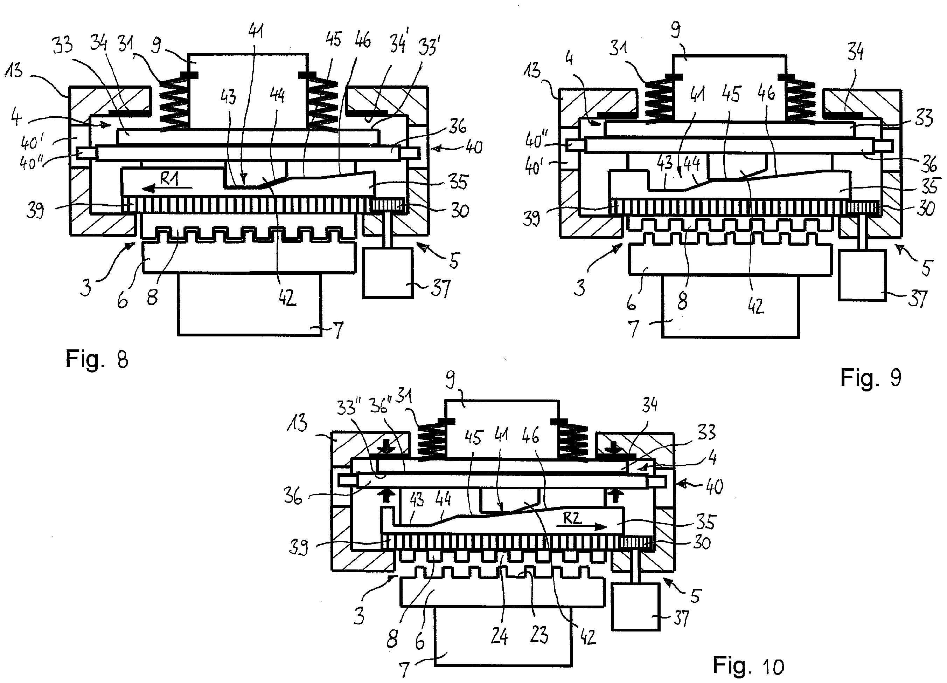

Jeder Stellkontur 41 des ersten Rings 35 ist ein Stützelement 42 des zweiten Rings 36 zugeordnet. In einer Endposition der Betätigungsvorrichtung 5 befindet sich das Stützelement 42 im ersten Abschnitt 43 der Stellkontur 42, so dass die beiden Ringe 35, 36 axial aneinander angenähert sind. In diesem Schaltzustand, welcher in Figur 8 dargestellt ist, ist die Kupplung 3 geschlossen (connect mode). Durch relatives Verdrehen des ersten Rings 35 in der ersten Drehrichtung R1 wandert das Stützelement 42 am Steigungsabschnitt 44 entlang, so dass der zweite Ring 36 axial vom ersten Ring 35 weg beaufschlagt wird. Dabei wird das zweite Kupplungsteil 8, an dem der zweite Ring 36 axial abgestützt ist, vom ersten Kupplungsteil 6 weg beaufschlagt, so dass die Kupplung 3 geöffnet wird. Ein vollständig geöffneter Zustand ist erreicht, wenn das Stützelement 42 im steigungslosen Zwischenabschnitt 45 anliegt. Dieser Zustand ist in Figur 9 gezeigt. Es ist erkennbar, dass die Kupplung 3 sowie die Bremse 4 geöffnet sind. Dieser Zustand kann auch als Freilauf (disconnect mode) bezeichnet werden.

Durch weiteres Drehen des ersten Rings 35 in der ersten Drehrichtung R1 über den Freilaufzustand hinaus wird der zweite Ring 36 zusammen mit dem zweiten Kupplungsteil 8 und dem damit verbundenen ersten Bremsteil 33 in Richtung zum zweiten Bremsteil 34 beaufschlagt. Das Stützelement 42 gleitet an dem flacheren Steigungsabschnitt 46 des ersten Rings 35 in Umfangsrichtung entlang. Dabei kommen die beiden Bremsenteile 33, 34 in Reibkontakt miteinander, so dass das drehende Bremsenteil 33 zusammen mit den hier antriebsverbundenen Bauteilen gegenüber dem stehenden Gehäuse 13 abgebremst wird. Dieser Bremszustand (brake mode) ist in Figur 10 gezeigt. Durch die Pfeile im Bereich der Bremse 4 wird der Reibschluss zwischen den beiden Bremsenteilen 33, 34 dargestellt. In diesem Zustand steht die zweite Antriebsteils 9 still und überträgt kein Drehmoment. Durch die Ausgestaltung der Rampenanordnung in der genannten Form ist gewährleistet, dass die Bremse 4 erst geschlossen wird, wenn die Kupplung 3 vollständig geöffnet ist.

Sofern eine erneute Drehmomentübertragung der zweiten Antriebsteils 9 gewünscht ist, wird der erste Ring 35 in nunmehr entgegengesetzter Drehrichtung R2 zurückgedreht. Dabei bewegt sich das Stellelement 42 entlang des Steigungsabschnitts 46 wieder in tiefere Bereiche, so dass das zweite Bremsenteil 33 aufgrund der Federkraft der Rückstellfeder 31 wieder vom ersten Bremsenteil 34 weg beaufschlagt wird. Die Bremsfunktion der zweiten Antriebsteils 9 ist somit aufgehoben. Durch weiteres Drehen des ersten Rings 35 über den Freilaufzustand hinaus wandern die Stützelemente 42 des zweiten Rings 36 bis in die jeweiligen Endabschnitte 43 des ersten Rings 35. Auf diese Weise wird auch das zweite Kupplungsteil 8 wieder axial in Richtung des ersten Kupplungsteils 6 beaufschlagt, bis es schließlich zum vollständigen Zahneingriff kommt. In diesem Zustand kann wieder eine Drehmomentübertragung von der ersten Welle 7 über die Kupplung 3 auf die zweite Antriebswelle 9 erfolgen.

Über den ganzen Verschiebeweg, den das zweite Kupplungsteil 8 aufgrund der Beaufschlagung durch den zweiten Ring 36 von der Schließstellung über die Freilaufstellung bis zur Bremsstellung zurücklegt, ist die Kupplungsverzahnung 10 mit der Wellenverzahnung 20 in drehfestem Eingriff. In der Schließstellung, welche auch in Figur 4 gezeigt ist, ist das zweite Kupplungsteil 8 von der Welle 9 axial weg beaufschlagt, so dass sich zwischen der Wellenverzahnung 20 und der Kupplungsverzahnung 10 ein geringer Spalt ausbildet. Dieser ist allerdings so klein, dass die Kupplungsverzahnung 10 nach wie vor mit der Wellenverzahnung 20 in formschlüssigem Eingriff bleibt. In der Offen- oder Bremsstellung ist die Kupplungsverzahnung 10 an die Wellenverzahnung 20 axial angenähert, so dass der Spalt verringert ist. Es ist in Figur 4 ferner erkennbar, dass die Profilverbindung 29 im Längsschnitt betrachtet ausgehend vom Endabschnitt 70 der Antriebswelle 9 einen ersten Abschnitt mit größerem Konuswinkel und einen daran anschließenden Abschnitt mit kleinerem Konuswinkel aufweist. Der kleinere Konuswinkel kann auch Null betragen, das heißt der zweite Abschnitt ist in diesem Fall ein Zylinderabschnitt. Wie insbesondere aus Figur 5D hervorgeht, ist die Kupplungsverzahnung 10 gegengleich gestaltet.

Die Ausführungsform gemäß den Figuren 8 bis 10 zeigt eine Rampenanordnung, bei der die Stellkontur 41 dem drehend antreibbaren ersten Ring 35 zugeordnet ist, während die Stützelemente 42 dem axial beweglichen zweiten Ring 36 zugeordnet sind. Es versteht sich, dass eine kinematisch umgekehrte Anordnung ebenso denkbar ist.

Die Figuren 11 bis 15, welche im Folgenden gemeinsam beschrieben werden, zeigen eine erfindungsgemäße Kupplungsanordnung 102 in einer weiteren Ausführungsform. Diese entspricht hinsichtlich Aufbau und Funktionsweise in weiten Teilen der Ausführungsform gemäß den Figuren 1 bis 10, so dass hinsichtlich der Gemeinsamkeiten auf die obige Beschreibung Bezug genommen wird. Einander entsprechende Bauteile sind mit um die Ziffer 100 höhergestellten Bezugszeichen versehen.

Die Kupplungsanordnung 102 umfasst ein erstes Antriebsteil 107, ein zweites Antriebsteil 109 und eine Kupplung 103, die im Leistungspfad zwischen den beiden Antriebsteilen 107, 109 angeordnet ist. Die Kupplung 103 weist ein axial abgestütztes erstes Kupplungsteil 106 und ein axial bewegliches zweites Kupplungsteil 108 auf, wobei das zweite Kupplungsteil in eine Offenstellung bewegbar ist, in der das erste und zweite Kupplungsteil 106, 108 um die Drehachse A frei gegeneinander drehen können, und in ein Schließstellung, in der die beiden Kupplungsteile 106, 108 zur Drehmomentübertragung miteinander formschlüssig in Eingriff sind. Zwischen dem zweiten Kupplungsteil 108 und dem zweiten Antriebsteil 109 ist eine Profilverbindung 129 gebildet. Die Profilverbindung 129 umfasst ein Kupplungsprofil 110, das fest mit dem zweiten Kupplungsteil 108 verbunden ist, und ein Antriebsteilprofil 120, das fest mit dem zweiten Antriebsteil 109 fest verbunden ist. Die Profilverbindung 129 ist derart gestaltet, dass das zweite Kupplungsteil 108 mit dem zweiten Antriebsteil 109 drehfest und axial beweglich verbunden ist. Es ist vorgesehen, dass das Antriebsteilprofil 120 des zweiten Antriebsteils 109 mittlere Flankenlinien aufweist, die jeweils zwischen einer Kopflinie und einer Fußlinie des Antriebsteilprofils gebildet sind, wobei das Antriebsteilprofil 120 derart gestaltet ist, dass die mittleren Flankenlinien bei Rotation um die Drehachse A eine Rotationsfläche definieren, die zumindest einen sich verjüngenden Teilabschnitt aufweist.

Bei der vorliegenden Ausführungsform ist die Kupplungsanordnung 102 Teil einer Antriebseinheit 88, die zum Antreiben einer Antriebsachse des Kraftfahrzeugs dient. Die Antriebseinheit 88 umfasst im Leistungspfad hinter der Kupplungsanordnung 102 ein Differentialgetriebe 89, welches eingeleitetes Drehmoment auf die beiden Seitenwellen des Kraftfahrzeugs verteilt. Mittels der Kupplung 103 kann optional Drehmoment von einer Antriebsquelle des Kraftfahrzeugs auf die Seitenwellen bei Bedarf übertragen, oder eine Drehmomentübertragung unterbrochen werden.

Die Kupplung 103 ist im Leistungspfad zwischen dem zweiten Antriebsteil 109 und dem ersten Antriebsteil 107 angeordnet. Das zweite Antriebsteil 109 ist Teil eines Differentialgehäuses, welches von einem Antriebsrad 90 um die Drehachse A drehend antreibbar ist. Das erste Antriebsteil 107 ist in Form eines Trägerelements des Differentialgetriebes 89 gestaltet. Zum Betätigen der Kupplung 103 ist eine Betätigungsvorrichtung (nicht dargestellt) vorgesehen, welche koaxial um einen Hülsenansatz 91 des Differentialgehäuses 109 angeordnet und beispielsweise in Form eines elektromagnetischen Aktuators gestaltet sein kann. Das Differentialgehäuse 109 ist zweiteilig aufgebaut und umfasst ein erstes Gehäuseteil 92 und ein zweites Gehäuseteil 93, die im Bereich ihrer öffnungsseitigen Enden jeweils einen Flanschabschnitt aufweisen, mit dem sie mit dem Antriebsrad 90 verbunden sind. Das Differentialgetriebe 89 ist in dem Differentialgehäuse 109 aufgenommen und um die Drehachse A drehbar gelagert.

In dem Trägerelement 107 sind zwei Bohrungen vorgesehen, in die ein Zapfen 94 eingesteckt und fixiert ist. Auf dem Zapfen 94 sind zwei Differentialräder 95 um eine Zapfenachse drehbar gelagert. Die beiden Differentialräder 95 sind mit einem ersten und einem zweiten Seitenwellenrad 96, 97 in Verzahnungseingriff, die koaxial zur Drehachse A angeordnet sind. Die beiden Seitenwellenräder 96, 97 haben jeweils eine Längsverzahnung, in die eine entsprechende Gegenverzahnung einer Seitenwelle (nicht dargestellt) zur Drehmomentübertragung eingesteckt werden kann. Die beiden Seitenwellenräder 96, 97 sind jeweils gegenüber dem Gehäuse 109 über reibungsmindernde Scheiben axial abgestützt.

Die Kupplung 103 ist als formschlüssige Kupplung gestaltet, die weitestgehend der Ausführungsform gemäß den Figuren 1 bis 10 entspricht, auf deren Beschreibung insofern Bezug genommen wird. Das erste Kupplungsteil 106 ist mit dem ersten Antriebsteil 107 (Differentialträger) fest verbunden, insbesondere einteilig mit diesem gestaltet. Das zweite Kupplungsteil 108 ist mit dem zweiten Antriebsteil 109 (Differentialgehäuse) drehfest und axial beweglich verbunden. Das zweite Kupplungsteil 108 ist relativ zum ersten Kupplungsteil 106 axial beweglich und kann zur Drehmomentübertragung in dieses eingerückt werden, so dass eine formschlüssige Verbindung entsteht. Durch erneutes Ausrücken des zweiten Kupplungsteils 108 kann die Drehmomentübertragung wieder unterbrochen werden.

Das zweite Kupplungsteil 108 hat einen Ringabschnitt 98, der innerhalb des Differentialgehäuses 109 angeordnet ist, und mehrere über den Umfang verteilte Verbindungselemente 99, die sich von dem Ringabschnitt 98 aus in axiale Richtung erstrecken. Das Kupplungsprofil 110 ist an einer Außenumfangsfläche des Ringabschnitts 98 gebildet und greift formschlüssig in das Antriebsteilprofil 120 an einer Innenumfangsfläche des Differentialgehäuses 109 ein. Durch die Profilverbindung 129 ist das zweite Kupplungsteil 108 mit dem zweiten Antriebsteil 109 drehfest und axial verschieblich verbunden. Dabei ist die Profilverbindung 129 so gestaltet, dass bei Drehmomentübertragung eine Axialkraft auf das zweite Kupplungsteil 108 im Schließsinne der Kupplung 103 ausgeübt wird, das heißt das zweite Kupplungsteil 108 wird in Richtung zum ersten Kupplungsteil 106 beaufschlagt.

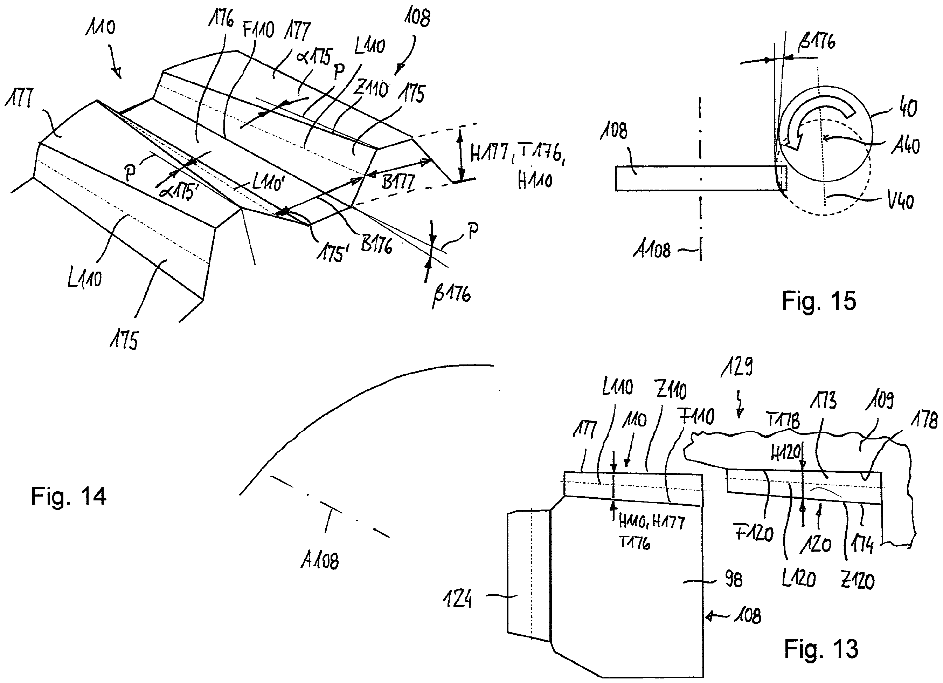

Ein Ausschnitt des zweiten Kupplungsteils 108 mit außenliegendem Kupplungsprofil 110 ist in Figur 14 gezeigt. Das Kupplungsprofil ist in Form einer Verzahnung gestaltet und weist Kupplungszähne 177 mit Zahnflanken 175, 175' und in Umfangsrichtung dazwischen liegende Zahnlücken 176 auf. Die Zahnflanken 175, 175' schließen in Radialansicht betrachtet mit einer Parallelen P zur Drehachse A108 jeweils einen Zahnflankenwinkel α177, α177' ein, der insbesondere größer als 1 ° und kleiner als 5° ist und vorliegend etwa 3° beträgt. Dasselbe gilt analog auch für das Antriebsteilprofil 120, das heißt im Zylinderschnitt betrachtet schließen Zahnflanken 173 des Antriebsteilprofils mit einer Parallelen P zur Drehachse A entsprechende Zahnflankenwinkel ein, die gleich groß sind wie die Zahnflankenwinkel α177, α177' der Kupplungsverzahnung 110. Die Zahnflankenwinkel der Profilverbindung 129 zwischen zweitem Kupplungsteil 108 und zweitem Antriebsteil 109 ist größer als die Kontaktflächenwinkel der Kupplungsverzahnung 123, 124.

Die Zähne 177 der Kupplungsverzahnung 110 haben eine variable Breite B177 über ihrer Länge, die in Richtung zum ersten Kupplungsteil 106 zunimmt. Die Zahnkopflinien Z110 der Kupplungsverzahnung 110 liegen auf einer zylindrischen Fläche, welche die Außenfläche des zweiten Kupplungsteils 108 bildet, wobei die Außenfläche zumindest in einem Teilabschnitt auch konisch gestaltet sein kann. Zwischen jeweils zwei in Umfangsrichtung benachbarten Kupplungszähnen 177 ist jeweils eine Zahnlücke 176 gebildet. Die Zahnlücken 176 haben eine in Richtung zum ersten Kupplungsteil 106 abnehmende Tiefe T176, welche der Zahnhöhe H175 entspricht. Durch die entlang der Kupplungsverzahnung 110 in Richtung zum ersten Kupplungsteil 106 zunehmende Breite B177 der Zähne 177 nimmt die Breite B176 der dazwischen liegenden Zahnlücken 176 entsprechend ab. Die Grundfläche einer Zahnlücke 176, welche die Zahnfußlinie F110 definiert, hat über ihre Länge eine konstante Breite. Die Summe aller Grundflächen bildet eine zur Drehachse konische Fläche.

Das Kupplungsprofil 110 kann beispielsweise mittels Fräsen hergestellt werden, wie in Figur 15 dargestellt. Zur Erzeugung der in der Tiefe und Breite zunehmenden Zahnlücken 176 kann die Rotationsachse A40 des Fräswerkzeugs 40 auf einer Vorschubachse V40 bewegt, die winklig zur Drehachse A108 des zweiten Kupplungsteils 108 verläuft. Der zwischen der Vorschubachse V40 und der Drehachse A108 eingeschlossene Winkel β176 definiert den Verlauf der Zahnfußlinien F110 entlang der Länge der Profilverzahnung 110. Die Zahnfußlinien F110 entfernen sich von der Drehachse A108 in Richtung zum ersten Kupplungsteil 106, was insbesondere in Figur 13 erkennbar ist. Das Antriebsteilprofil 120 des Differentialgehäuses 109 kann gegengleich zum Kupplungsprofil 110 gestaltet sein. Bezüglich weiterer Einzelheiten hinsichtlich Ausgestaltung und Funktionsweise der Profilverbindung 129 wird auch auf die Beschreibung zur Ausführungsform gemäß den Figuren 1 bis 10 Bezug genommen, welche für die vorliegende Ausführungsform gemäß den Figuren 11 bis 15 analog gelten.

Die Verbindungselemente 99 erstrecken sich in axiale Richtung durch umfangsverteilte Öffnungen des Differentialgehäuses 109 hindurch und sind in Form von Bolzen gestaltet, die mit einem Ende in eine Stirnseite des zweiten Kupplungsteils 108 eingeschraubt sind, und an ihrem anderen Ende mit einem Trägerelement 100 verbunden. Das Trägerelement 100 ist scheibenförmig gestaltet und kann als Geberelement für einen Sensor zum Sensieren der Schaltposition der Kupplung 103 dienen. Zwischen dem Trägerelement 100 und dem zweiten Antriebsteil 109 sind die Federmittel 131 erkennbar, welche die Kupplung 103 in die Offenstellung beaufschlagen. Zum Schließen der Kupplung 103 wird die Betätigungsvorrichtung angesteuert, welche auf das Trägerelement 100 einwirkt, um dieses entgegen der Federkraft der Feder 131 in Richtung zum ersten Kupplungsteil 106 axial zu bewegen.

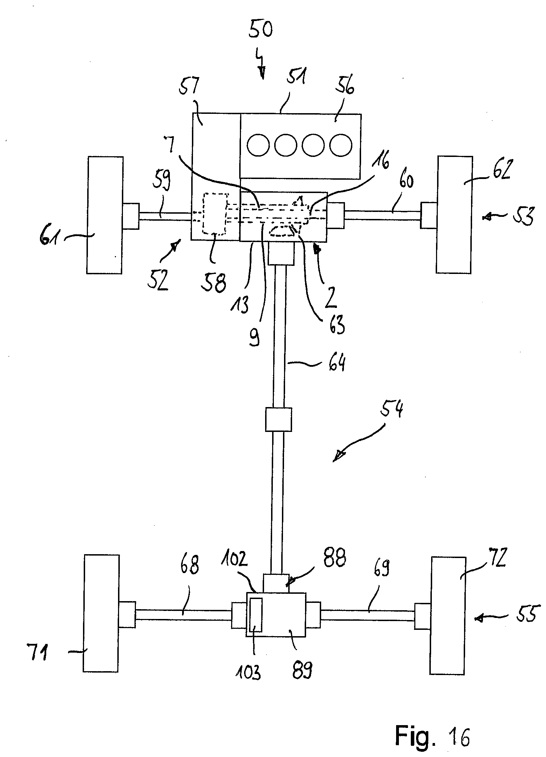

Die Figur 16 zeigt schematisch eine erfindungsgemäße Antriebsstranganordnung 50 mit einer erfindungsgemäßen Kupplungsanordnung 2 gemäß den Figuren 1 bis 10 sowie mit einer erfindungsgemäßen Kupplungsanordnung 102 gemäß den Figuren 11 bis 15. Es versteht sich, dass die Antriebsstranganordnung 50 auch nur eine der beiden erfindungsgemäßen Kupplungsanordnungen 2, 102 aufweisen kann. Die Antriebsstranganordnung 50 umfasst eine Antriebseinheit 51 einen ersten Antriebsstrang 52 zum Antreiben einer ersten Antriebsachse 53 und einen zweiten Antriebsstrang 54 zum Antreiben einer zweiten Antriebsachse 55. Die Antriebseinheit 51 umfasst einen Verbrennungsmotor 56 und ein Schaltgetriebe 57, über welches Drehmoment in den ersten und zweiten Antriebsstrang 52, 54 eingeleitet wird. Es versteht sich, dass die Antriebseinheit 51 auch ein beliebiger anderer Antrieb sein kann, beispielsweise ein Elektromotor.

Zum Aufteilen des von der Antriebseinheit 51 erzeugten Drehmoments auf die beiden Antriebsstränge 52, 54 ist ein Verteilergetriebe 58 vorgesehen, das beispielsweise in Form eines Differentialgetriebes gestaltet sein kann. Mit dem Verteilergetriebe 58 ist die erfindungsgemäße Kupplungsanordnung 2 verbunden, welche gemäß den Figuren 1 bis 10 gestaltet sein kann. Hierfür wird das ortsfeste Gehäuse 13 über den Verbindungsabschnitt 14 mit dem Gehäuse des Getriebes 57 verbunden. Die Durchtriebswelle 16 wird mit einem ersten Ausgangsteil des Verteilergetriebes 58 verbunden, während die erste Welle 7 mit einem zweiten Ausgangsteil des Verteilergetriebes 58 antriebsverbunden wird. Der erste Antriebsstrang 52 umfasst die mit dem Verteilergetriebe 58 antriebsverbundenen Seitenwellen 59, 60, über die das eingeleitete Drehmoment auf die zugehörigen Räder 61, 62 übertragen wird.

Über die erfindungsgemäße Kupplungsanordnung 2, welche auch als Abtriebseinheit (Power Take-off Unit) bezeichnet werden kann, kann ein Teil des Drehmoments von der ersten Welle 7 bei geschlossener Kupplung 3 auf die zweite Antriebswelle 9 übertragen werden. Über die zweite Antriebswelle 9 wird der zweite Antriebsstrang 54 angetrieben, welcher in Reihe die folgenden Baugruppen umfasst, die miteinander zur Übertragung eines Drehmoments antriebsverbunden sind: einen Winkeltrieb 63, eine Längsantriebswelle 64, einen zweiten Winkeltrieb 65, eine zweite Kupplungsanordnung 102, ein zweites Achsdifferential 89, das über Seitenwellen 68, 69 die Räder 71, 72 der zweiten Antriebsachse 55 antreibt.

Der Winkeltrieb 63 umfasst ein Tellerrad 83, welches drehfest mit der zweiten Antriebswelle 9 verbunden ist, sowie ein Kegelrad 84, das über ein Gleichlaufdrehgelenk 85 mit der Längsantriebswelle 64 verbunden ist. Das Kegelrad 84 ist über Wälzlager 86, 87 in einem Hülsenansatz des Gehäuses 13 um eine Drehachse A2 drehbar gelagert. Die Drehachse A2 verläuft senkrecht zur Drehachse A1 der zweiten Antriebswelle 9 bzw. des Tellerrads 73.

Eine Besonderheit der Antriebsstranganordnung 50 ist, dass bei geöffneter Kupplung 3 der ersten Kupplungsanordnung 2 sowie geöffneter Kupplung 103 der zweiten Kupplungsanordnung 102 der im Leistungspfad zwischen den beiden Kupplungen 3, 103 liegende Antriebsstrang drehmomentfrei geschaltet werden kann. Mit der Kupplung 3 kann die zweite Antriebswelle 9 und die hiermit antriebsmäßig verbundenen Bauteile in einen drehmomentübertragenden oder einen drehmomentfreien Zustand versetzt werden. Im drehmomentfreien Zustand ermöglicht die Bremse 4 der ersten Kupplungsanordnung 2, dass der Antriebsstrang vollständig stillsteht, so dass Verlustleistungen aufgrund von Schleppmomenten und Reibung vermindert sind. Dies wiederum bewirkt einen reduzierten Kraftstoffverbrauch für die Fahrzustände, in denen lediglich die erste Antriebsachse angetrieben wird und die zweite Antriebsachse drehmomentfrei mitläuft. Ein weiterer Vorteil der erfindungsgemäßen Kupplungsanordnungen 2, 102 liegt in der Ausgestaltung der Profilverbindungen 29, 129, welche konische Teilflächen aufweisen. Dies ermöglicht insbesondere eine umformende Fertigung der Profile, wobei gegebenenfalls auf eine spanende Nachbearbeitung verzichtet werden kann.

### Bezugszeichenliste

- 2, 102: Kupplungsanordnung
- 3, 103: Kupplung
- 4: Bremse
- 5: Betätigungsvorrichtung
- 6, 106: erstes Kupplungsteil
- 7, 107: erstes Antriebsteil
- 8, 108: zweites Kupplungsteil
- 9, 109: zweites Antriebsteil
- 10, 110: Kupplungsprofil / Kupplungsverzahnung
- 11: Lager
- 12: Lager
- 13: Gehäuse
- 14: Verbindungsmittel
- 15: Anschlussmittel
- 16: Durchtriebswelle
- 17: Lager
- 18: erstes Ende
- 19: zweites Ende
- 20, 120: Antriebsteilprofil / Antriebsteilverzahnung
- 21: Dichtung
- 22: Dichtung
- 23, 123: erste Eingriffsmittel
- 24, 124: zweite Eingriffsmittel
- 25: Wellenverzahnung
- 26: Sicherungsring
- 27: Lager
- 28: Lager
- 29: Profilverbindung / Keilwellenverbindung
- 30: Ritzel
- 31: Feder
- 32: Stützfläche
- 33: erstes Bremsenteil
- 34: zweites Bremsenteil
- 35: erster Ring
- 36: zweiter Ring
- 37: Antrieb
- 38: Rädergetriebe
- 39: Außenverzahnung
- 40: Fräswerkzeug
- 41: Stellkontur
- 42: Stützelement
- 43: erster Abschnitt
- 44: zweiter Abschnitt
- 45: dritter Abschnitt
- 46: vierter Abschnitt
- 47: Endabschnitt
- 48: Feder
- 49: Anlagefläche
- 50: Antriebsstranganordnung
- 51: Antriebseinheit
- 52: erster Antriebsstrang
- 53: erste Antriebsachse
- 54: zweiter Antriebsstrang
- 55: zweite Antriebsachse
- 56: Motor
- 57: Getriebe
- 58: Verteilergetriebe
- 59: Seitenwelle
- 60: Seitenwelle
- 61: Rad
- 62: Rad
- 63: Winkeltrieb
- 64: Längsantriebswelle
- 65: Winkeltrieb
- 68: Seitenwelle
- 69: Seitenwelle
- 70: Wellenende
- 71: Rad
- 72: Rad
- 73, 173: Profilflanke / Zahnflanke
- 74, 174: Profilelement / Wellenzahn
- 75, 175: Profilflanke / Zahnflanke
- 76, 176: Profillücke / Zahnlücke
- 77, 177: Profilelement / Kupplungszahn
- 78, 178: Zahnlücke
- 79: Stirnzahn
- 80: Abschnitt
- 81: Eingriffsfläche
- 83: Tellerrad
- 84: Kegelrad
- 85: Gleichlaufgelenk
- 86: Lager
- 87: Lager
- 88: Antriebseinheit
- 89: Differentialgetriebe
- 90: Antriebsrad
- 91: Hülsenansatz
- 92: Gehäuseteil
- 93: Gehäuseteil
- 94: Zapfen
- 95: Differentialrad
- 96: Seitenwellenrad
- 97: Seitenwellenrad
- 98: Ringabschnitt
- 99: Verbindungselement
- 100: Trägerelement
- A: Drehachse
- B: Breite
- E: Ebene
- F: Fußlinie
- H: Höhe
- L: Flankenlinie
- P: Parallele
- Z: Kopflinie
- α, β, δ: Winkel

## Patentansprüche

1. Kupplungsanordnung zum Einsatz in einem Antriebsstrang eines Kraftfahrzeugs, umfassend:
ein erstes Antriebsteil (7, 107), ein zweites Antriebsteil (9, 109),
eine Kupplung (3, 103), welche ein axial abgestütztes erstes Kupplungsteil (6, 106) und ein axial bewegliches zweites Kupplungsteil (8, 108) aufweist, wobei das zweite Kupplungsteil (8, 108) in eine Offenstellung bewegbar ist, in der das erste und zweite Kupplungsteil (6, 8; 106, 108) um eine Drehachse (A) frei gegeneinander drehen können, und in ein Schließstellung, in der das erste und zweite Kupplungsteil (6, 8; 106, 108) zur Drehmomentübertragung miteinander formschlüssig in Eingriff sind,
wobei ein Kupplungsprofil (10, 110) des zweiten Kupplungsteils (8) und ein Antriebsteilprofil (20, 120) des zweiten Antriebsteils (9, 109) eine formschlüssige Profilverbindung (29, 129) bilden, derart, dass das zweite Kupplungsteil (8, 108) mit dem zweiten Antriebsteil (9, 109) drehfest und axial beweglich verbunden ist,
wobei das Antriebsteilprofil (20, 120) des zweiten Antriebsteils (9, 109) mittlere Flankenlinien (L20, L120) aufweist, die jeweils zwischen einer Kopflinie (Z20, Z120) und einer Fußlinie (F20, F120) des Antriebsteilprofils (20, 120) gebildet sind,
**dadurch gekennzeichnet, dass** das Antriebsteilprofil (20, 120) derart gestaltet ist, dass die mittleren Flankenlinien (L20, L120) bei Rotation um die Drehachse (A) eine Rotationsfläche definieren, die zumindest einen sich verjüngenden Teilabschnitt aufweist, wobei das Kupplungsprofil (10, 110) und das Antriebsteilprofil (20, 120) derart gestaltet sind, dass bei Drehmomentübertragung eine Axialkraft von dem zweiten Antriebsteil (9, 109) auf das zweite Kupplungsteil (8, 108) in Richtung zum ersten Kupplungsteil (6, 106) ausgeübt wird.

2. Kupplungsanordnung nach Anspruch 1, **dadurch gekennzeichnet, dass** das Antriebsteilprofil (20) mehrere Profilelemente (74) aufweist, für die zumindest eines von Folgendem gilt:
die Profilelemente (74) haben eine variable Breite (B74) über der Länge, die in Richtung zum ersten Kupplungsteil (6) abnimmt;
die Profilelemente (74) bilden die Zahnkopflinien (Z20) des Antriebsprofils (20), wobei die Zahnkopflinien (Z20) auf einer zylindrischen Außenfläche des zweiten Antriebsteils (9) liegen;
zwischen den Profilelementen (74) sind Profillücken (76) gebildet, wobei die Profillücken eine variable Tiefe (T76) über der Länge haben, die in Richtung zum ersten Kupplungsteil (6) zunimmt.

3. Kupplungsanordnung nach einem der Ansprüche 1 oder 2, **dadurch gekennzeichnet, dass** das Kupplungsprofil (10) mehrere Kupplungsprofilelemente (77) aufweist, für die zumindest eines von Folgendem gilt:
die Kupplungsprofilelemente (77) haben eine variable Breite (B77) über der Länge, die in Richtung zum ersten Kupplungsteil (6) zunimmt;
Kopflinien (Z10) der Kupplungsprofilelemente (77) bilden eine Kopflinienfläche, die sich in Richtung zum ersten Kupplungsteil (6) konisch verjüngt;
die Kupplungsprofilelemente (77) haben eine variable Höhe (H77) über der Länge, die in Richtung zum ersten Kupplungsteil (6) zunimmt.

4. Kupplungsanordnung nach Anspruch 1, **dadurch gekennzeichnet, dass** das Antriebsteilprofil (120) mehrere Profilelemente (174) aufweist, für die zumindest eines von Folgendem gilt:
die Profilelemente (174) haben eine variable Breite (B174) über der Länge, die in Richtung zum ersten Kupplungsteil (106) abnimmt;
die Profilelemente (174) bilden die Zahnkopflinien (Z120) des Antriebsprofils (20), wobei die Zahnkopflinien (Z120) auf einer konischen Innenfläche des zweiten Antriebsteils (109) liegen;
zwischen den Profilelementen (174) sind Profillücken (178) gebildet, wobei die Profillücken eine variable Tiefe (T178) über der Länge haben, die in Richtung zum ersten Kupplungsteil (106) zunimmt.

5. Kupplungsanordnung nach einem der Ansprüche 1 oder 4, **dadurch gekennzeichnet, dass** das Kupplungsprofil (110) mehrere Kupplungsprofilelemente (177) aufweist, für die zumindest eines von Folgendem gilt:
die Kupplungsprofilelemente (177) haben eine variable Breite (B177) über der Länge, die in Richtung zum ersten Kupplungsteil (106) zunimmt;
Kopflinien (Z110) der Kupplungsprofilelemente (177) bilden eine Kopflinienfläche, die zylindrisch ist oder sich in Richtung zum ersten Kupplungsteil (106) konisch erweitert;
die Kupplungsprofilelemente (177) haben eine variable Höhe (H177) über der Länge, die in Richtung zum ersten Kupplungsteil (106) abnimmt.

6. Kupplungsanordnung nach einem der Ansprüche 3 oder 5, **dadurch gekennzeichnet, dass** eine Profilflanke (75, 75', 175, 175') eines Kupplungsprofilelements (77, 177), im Zylinderschnitt durch das Kupplungsprofil (10, 110), mit einer Parallelen (P) zur Drehachse (A) einen Profilflankenwinkel (α75, α75'; α175, α175') einschließt, der größer als 1° und kleiner als 5° ist.

7. Kupplungsanordnung nach einem der Ansprüche 1 bis 6, **dadurch gekennzeichnet, dass** die Profilverbindung (29, 129) in Form einer Keilwellenverbindung (splined connection) mit ineinandergreifender Wellenverzahnung und Kupplungsverzahnung gestaltet ist, wobei die Wellenverzahnung und die Kupplungsverzahnung jeweils zumindest eine konische Teilfläche aufweisen.

8. Kupplungsanordnung nach Anspruch 6, **dadurch gekennzeichnet, dass** erste Eingriffselemente (23, 123) des ersten Kupplungsteils (6, 106) und zweite Eingriffselemente (24, 124) des zweiten Kupplungsteils (8, 108) in der Schließstellung ineinandergreifen und an Eingriffsflächen (81, 81') zur Kraftübertragung in Kontakt sind, wobei die Eingriffsflächen (81, 81'), im Querschnitt durch die Eingriffselemente betrachtet, mit einer die Drehachse (A) enthaltenden Längsebene (E) jeweils einen Eingriffsflächenwinkel (δ81, δ81') einschließen,
wobei zumindest einer der Eingriffsflächenwinkel (δ81, δ81') kleiner ist als zumindest einer der Profilflankenwinkel (α75, α75').

9. Kupplungsanordnung nach Anspruch 8, **dadurch gekennzeichnet, dass** die ersten und zweiten Eingriffselemente (23, 24; 123, 124) jeweils als Stirnverzahnungen gestaltet sind, die in einander gegenüberliegenden Stirnflächen des ersten und zweiten Kupplungsteils (6, 8; 106, 108) ausgebildet sind,
wobei für zumindest eine der Stirnverzahnungen (23, 24; 123, 124) zumindest eines von Folgendem gilt:
Stirnzähne (79) der Stirnverzahnung (24, 124) haben eine variable Breite (B79) über der Länge, die von radial innen nach radial außen zunimmt;
die Eingriffsflächen (81, 81') sind durch Zahnflanken der Stirnzähne (79) gebildet, die im Querschnitt durch die Stirnverzahnung (24, 124) betrachtet winklig zu einander verlaufen.

10. Kupplungsanordnung nach einem der Ansprüche 1 bis 9, **dadurch gekennzeichnet, dass** eine Bremse (4) vorgesehen ist, mit der das zweite Antriebsteil (9) gegenüber einem ortsfesten Bauteil (13) abbremsbar ist, und
eine Betätigungsvorrichtung (5), mit der die Kupplung (3) und die Bremse (4) betätigbar sind.

11. Kupplungsanordnung nach Anspruch 10, **dadurch gekennzeichnet, dass** die Betätigungsvorrichtung (5) einen Rampenmechanismus mit einem axial abgestützten ersten Ring (35) und einem axial beweglichen zweiten Ring (36) umfasst, wobei der zweite Ring (36) gegenüber dem ersten Ring (35) axial verschiebbar ist, wenn der erste und der zweite Ring (35, 36) mittels eines Antriebs (37) relativ zueinander verdreht werden,
wobei die Betätigungsvorrichtung (5) derart gestaltet ist, dass - ausgehend von einer Endposition, in der der erste Ring (35) und der zweite Ring (36) aneinander axial angenähert sind - durch relatives Verdrehen des ersten Rings (35) zum zweiten Ring (36) in einem ersten Drehbereich die Kupplung (3) geöffnet wird, und, dass bei weiterem Verdrehen in derselben Drehrichtung (R1) in einem zweiten Drehbereich die Bremse (4) geschlossen wird.

12. Kupplungsanordnung nach einem der Ansprüche 1 bis 11, **dadurch gekennzeichnet, dass** das zweite Antriebsteil (109) in Form eines Differentialgehäuses gestaltet ist, das von einem Antriebsrad (90) um die Drehachse (A) drehend antreibbar ist, und
dass das erste Antriebsteil (107) in Form eines Differentialträgers gestaltet ist, der in dem Differentialgehäuse (109) um die Drehachse (A) drehbar angeordnet ist;
wobei die Kupplung (103) im Leistungspfad zwischen dem Differentialgehäuse (109) und dem Differentialträger (107) angeordnet ist, so dass eine Drehmomentübertragung vom Differentialgehäuse (109) auf den Differentialträger (107) wahlweise hergestellt oder unterbrochen werden kann; wobei das erste Kupplungsteil (106) der Kupplung (103) mit dem Differentialträger (107) fest verbunden ist und das zweite Kupplungsteil (108) der Kupplung (103) relativ zum Differentialgehäuse (109) drehfest und axial beweglich gehalten ist; wobei eine Betätigungsvorrichtung zum Betätigen der Kupplung (103) vorgesehen ist.

13. Kupplungsanordnung nach Anspruch 12, **dadurch gekennzeichnet, dass** das zweite Kupplungsteil (108) einen Ringabschnitt (98) aufweist, der in dem Differentialgehäuse (109) angeordnet ist, und mehrere Verbindungselemente (99), die sich axial von dem Ringabschnitt (98) durch Öffnungen im Differentialgehäuse (109) nach außen hindurcherstrecken, wobei das Kupplungsprofil (110) an einer Außenumfangsfläche des zweiten Kupplungsteils (108) gebildet ist, und wobei das Antriebsteilprofil (120) an einer Innenumfangsfläche des Differentialgehäuses (109) gebildet ist.

14. Kupplungsanordnung nach einem der Ansprüche 1 bis 11, dass ein Winkeltrieb mit einem Tellerrad (83) und einem Kegelrad (84) vorgesehen ist, die zur Drehmomentübertragung miteinander in Verzahnungseingriff sind, wobei das zweite Antriebsteil (9, 109) mit dem Tellerrad (73) fest verbunden und koaxial zum ersten Antriebsteil (9, 109) drehbar gelagert ist.

15. Antriebsstranganordnung (50) für ein Kraftfahrzeug, umfassend:
einen permanent antreibbaren ersten Antriebsstrang (52) mit einer ersten Antriebsachse (53),
einen optional antreibbaren zweiten Antriebsstrang (54) mit einer zweiten Antriebsachse (55),
wobei der zweite Antriebsstrang (54) eine erste Kupplungsanordnung (2), eine zweite Kupplungsanordnung (102) und eine Antriebswelle (64) umfasst, die im Leistungspfad zwischen der ersten und der zweiten Kupplungsanordnung (2, 102) angeordnet ist,
**dadurch gekennzeichnet, dass** zumindest eine von der ersten und der zweiten Kupplungsanordnungen (2, 102) nach einem der Ansprüche 1 bis 14 gestaltet ist.

## Claims

1. Clutch assembly for being used in a driveline of a motor vehicle, comprising:
a first drive part (7, 107), a second drive part (9, 109), a clutch (3, 103) which comprises an axially supported first clutch part (6, 106) and an axially movable second clutch part (8, 108), wherein the second clutch part (8, 108) is movable into an open position in which the first and the second clutch part (6, 8; 106, 108) are freely rotatable relative to one other around a rotational axis (A), and into a closed position in which the first and the second clutch part (6, 8; 106, 108) are form-lockingly engaged with each other to transmit torque,
wherein a clutch profile (10, 110) of the second clutch part (8) and a drive part profile (20, 120) of the second drive part (9, 109) form a form-locking profile connection (29, 129) such that the second clutch part (8, 108) is connected to the second drive part (9, 109) in a rotationally fixed and axially movable way,
wherein the drive part profile (20, 120) of the second drive part (9, 109) comprises central flank lines (L20, L120) which are each formed between a tip line (Z20, Z120) and a base line (F20, F120) of the drive part profile (20, 120),
**characterised in that** the drive part profile (20, 120) is designed such that the central flank lines (L20, L120), when rotating around the rotational axis (A), define a rotational face which comprises at least a tapered portion, wherein the clutch profile (10, 110) and the drive part profile (20, 120) are formed such that upon torque transmission an axial force is exerted from the second drive part (9, 109) onto the second clutch part (8, 108) in direction towards the first clutch part (6, 106).

2. Clutch assembly according to claim 1, **characterised in that** the drive part profile (20) comprises a plurality of profile elements (74) to which at least one of the following applies:
the profile elements (74) comprise a variable width (B74) along the length, which decreases towards the first clutch part (6);
the profile elements (74) form tooth tip lines (Z20) of the drive profile (20), wherein the tooth tip lines (Z20) are positioned on a cylindrical outer face of the second drive part (9);
profile gaps (76) are formed between the profile elements (74), wherein the profile gaps comprise a variable depth (T76) along the length, which increases in direction towards the first clutch part (6).

3. Clutch assembly according to any one of claims 1 or 2, **characterised in that** the clutch profile (10) comprises a plurality of clutch profile elements (77) for which at least one of the following applies:
the clutch profile elements (77) comprise a variable width (B77) along the length, which increases towards the first clutch part (6);
tip lines (Z10) of the clutch profile elements (77) form a tip line face which is conically tapered towards the first clutch part (6);
the clutch profile elements (77) comprise a variable height (H77) along the length, which increases in direction towards the first clutch part (6).

4. Clutch assembly according to claim 1, **characterised in that** the drive part profile (120) comprises a plurality of profile elements (174) for which at least one of the following applies:
the profile elements (174) comprise a variable width (B174) along the length, which decreases towards the first clutch part (106);
the profile elements (174) form tooth tip lines (Z120) of the drive profile (20), wherein the tooth tip lines (Z120) are arranged on a conical inner face of the second drive part (109);
profile gaps (178) are formed between the profile elements (174), wherein the profile gaps have a variable depth (T178) along the length, which increases in direction towards the first clutch part (106).

5. Clutch assembly according to claim 1 or 4, **characterised in that** the clutch profile (110) comprises a plurality of clutch profile elements (177) for which at least one of the following applies:
the clutch profile elements (177) comprise a variable width (B177) along the length, which increases towards the first clutch part (106);
tip lines (Z110) of the clutch profile elements (177) form a tip line face which is cylindrical or widens conically towards the first clutch part (106);
the clutch profile elements (177) have a variable height (H177) along the length, which decreases towards the first clutch part (106).

6. Clutch assembly according to claim 3 or 5, **characterised in that** a profile flank (75, 75', 175, 175') of a clutch profile element (77, 177), in a cylindrical section through the clutch profile (10, 110), and a parallel (P) to the rotational axis (A) include a profile flank angle (α75, α75', α175, α175') which is greater than 1° and smaller than 5°.

7. Clutch assembly according any one of claims 1 to 6, **characterised in that** the profile connection (29, 129) is provided in the form of a splined connection with inter-engaging shaft teeth and clutch teeth, wherein the shaft teeth and the clutch teeth comprise at least a partial face that is conical.

8. Clutch assembly according to claim 6, **characterised in that** first engaging elements (23, 123) of the first clutch part (6, 106) and second engaging elements (24, 124) of the second clutch part (8, 108) engage one another in the closed position and contact each other at engaging faces (81, 82') to transmit power, and wherein the engaging faces (81, 81'), if viewed in a cross-section through the engaging elements, enclose a respective engaging face angle (ð81, ð81') with a longitudinal plane E containing the rotational axis (A),
wherein at least one of the engaging face angles (ð81, ð81') is smaller than at least one of the profile flank angles (α75, α75').

9. Clutch assembly according to claim 8, **characterised in that** the first and the second engaging elements (23, 24; 123, 124) are each provided in the form of face toothings which are formed in opposed end faces of the first and the second clutch part (6, 8; 106, 108),
wherein for at least one of the face toothings (23, 24; 123, 124) at least one of the following applies:
face teeth (79) of the face toothing (24, 124) have a variable width (B79) along the length, which increases from radial inside to radial outside;
the engaging faces (81, 81') are provided in the form of tooth flanks of the face teeth (79) which extend at an angle relative to one another in a cross-section through the face toothing (24, 124).

10. Clutch assembly according to any one of claims 1 to 9, **characterised in that** a brake (4) is provided by which the second drive part (9) can be braked relative to a stationary component (13), and an actuating device (5) by which the clutch (3) and the brake (4) can be actuated.

11. Clutch assembly according to claim 10, **characterised in that** the actuating device (5) comprises a ramp mechanism with an axially supported first ring (35) and an axially movable second ring (36), with the second ring (36) being axially displaceable relative to the first ring (35) when the first and the second ring (35, 36) are rotated relative to one another by a drive (37),
wherein the actuating device (5) is designed such that - starting from an end position in which the first ring (35) and the second ring (36) are axially approximated to one another - the clutch (3) is opened by relatively rotating the first ring (35) relative to the second ring (36), in a first rotational range, and that, upon further rotation in the same rotational direction (R1), the brake (4) is closed in a second rotational range.

12. Clutch assembly according to any one of claims 1 to 11, **characterised in that** the second drive part (109) is provided in the form of a differential housing which is rotatingly drivable around the rotational axis (A) by a drive gear (90), and
that the first drive part (107) is provided in the form of a differential carrier which is arranged in the differential housing (109) so as to be rotatable around the rotational axis (A);
wherein the clutch (103) is arranged in the power path between the differential housing (109) and the differential carrier (107), so that a transmission of torque from the differential housing (109) to the differential carrier (107) can selectively be effected or interrupted; wherein the first clutch part (106) of the clutch (103) is firmly connected to the differential carrier (107) and the second clutch part (108) of the clutch (103) is held in a rotationally fixed and axially movable way relative to the differential housing (109);
wherein an actuating device is provided for actuating the clutch (103).

13. Clutch assembly according to claim 12, **characterised in that** the second clutch part (108) comprises an annular portion (98) arranged in the differential housing (109) and a plurality of connecting elements (99) which extend from the annular portion (98) axially outwardly through openings in the differential housing (109), wherein the clutch profile (110) is formed at an outer circumferential face of the second clutch part (108), and wherein the drive part profile (120) is provided at an inner circumferential face of the differential housing (109).

14. Clutch assembly according to any one of claims 1 to 11, **characterised in that** an angular drive is provided with a ring gear (83) and a bevel gear (84), which engage each other to transmit torque, wherein the second drive part (9, 109) is firmly connected to the ring gear (73) and is rotatably supported coaxially to the first drive part (9, 109).

15. Driveline assembly (50) for a motor vehicle, comprising:
a permanently drivable first driveline (52) with a first driving axle (53),
an optionally drivable second driveline (54) with a second driving axle (55),
wherein the second driveline (54) comprises a first clutch assembly (2), a second clutch assembly (102) and a driveshaft (64) which is arranged in the power path between the first and the second clutch assembly (2, 102),
**characterised in that** at least one of the first and the second clutch assembly (2, 102) is designed according to any one of claims 1 to 14.

## Revendications

1. Ensemble d'embrayage pour utilisation dans une chaîne cinématique de transmission d'un véhicule automobile, comprenant :
une première partie de transmission (7, 107), une deuxième partie de transmission (9, 109),
un embrayage (3, 103), lequel comporte une première partie d'embrayage (6, 106) axialement soutenue et une deuxième partie d'embrayage (8, 108) axialement mobile, sachant que la deuxième partie d'embrayage (8, 108) est mobile dans une position ouverte, dans laquelle la première et la deuxième partie d'embrayage (6,8;106,108) peuvent tourner librement l'une contre l'autre autour d'un axe de rotation (A) et dans une position de fermeture dans laquelle la première et la deuxième partie d'embrayage (6,8;106, 108) sont en prise l'une avec l'autre par conformité de forme, sachant qu'un profilé d'embrayage (10, 110) de la deuxième partie d'embrayage (8) et un profilé de partie de transmission (20, 120) de la deuxième partie de transmission (9, 109) forment un assemblage profilé (29, 129) par conformité de forme de telle manière que la deuxième partie d'embrayage (8, 108) est reliée solidaire en rotation et de façon axialement mobile à la deuxième partie de transmission (9, 109),
sachant que le profilé de partie de transmission (20, 120) de la deuxième partie de transmission (9, 109) comporte des lignes de flanc médianes (L20, L120), qui sont formées respectivement entre une ligne de tête (Z20, Z120) et une ligne de pied (F20, F120) du profilé de partie de transmission (20, 120),
**caractérisé en ce que** le profilé de partie de transmission (20, 120) est structuré de telle manière que les lignes de flanc médianes (L20, L120) définissent lors de la rotation une surface de rotation autour de l'axe de rotation (A), qui comporte au moins une partie de section se réduisant, sachant que le profilé d'embrayage (10, 110) et le profilé de partie de transmission (20, 120) sont structurés de telle manière que lors de la transmission du couple, une force axiale est exercée par la deuxième partie de transmission (9, 109) sur la deuxième partie d'embrayage (8, 108) en direction de la première partie d'embrayage (6, 106).

2. Ensemble d'embrayage selon la revendication 1, **caractérisé en ce que** le profilé de partie de transmission (20) comporte plusieurs éléments profilés (74) pour lesquels au moins un des éléments suivants s'applique :
les éléments profilés (74) ont une largeur variable (B74) sur la longueur, qui diminue en direction de la première partie d'embrayage (6),
les éléments profilés (74) forment les lignes de tête de dent (Z20) du profilé de transmission (20), sachant que les lignes de tête de dent (Z20) se situent sur une surface extérieure cylindrique de la deuxième partie de transmission (9),
des creux profilés (76) sont formés entre les éléments profilés (74),
sachant que les creux profilés ont une profondeur variable (T76) sur la longueur, qui augmente en direction de la première partie d'embrayage (6).

3. Ensemble d'embrayage selon l'une quelconque des revendications 1 ou 2, **caractérisé en ce que** le profilé d'embrayage (10) comporte plusieurs éléments profilés d'embrayage (77), pour lesquels au moins un des éléments suivants s'applique :
les éléments profilés d'embrayage (77) ont une largeur variable (B77) sur la longueur, qui augmente en direction de la première partie d'embrayage (6), les lignes de tête (Z10) des éléments profilés d'embrayage (77) forment une surface de ligne de tête, qui se réduit de façon conique en direction de la première partie d'embrayage (6),
les éléments profilés d'embrayage (77) ont une hauteur variable (H77) sur la longueur, qui augmente en direction de la première partie d'embrayage (6).

4. Ensemble d'embrayage selon la revendication 1, **caractérisé en ce que** le profilé de partie de transmission (120) comporte plusieurs éléments profilés (174) pour lesquels au moins un des éléments suivants s'applique :
les éléments profilés (174) ont une largeur variable (B174) sur la longueur, qui diminue en direction de la première partie d'embrayage (106),
les éléments profilés (174) forment les lignes de tête de dent (Z120) du profilé de transmission (20), sachant que les lignes de tête de dent (Z120) se situent sur une surface intérieure conique de la deuxième partie de transmission (109),
des creux profilés (178) sont formés entre les éléments profilés (174), sachant que les creux profilés ont une profondeur variable (T178) sur la longueur, qui augmente en direction de la première partie d'embrayage (106).

5. Ensemble d'embrayage selon l'une quelconque des revendications 1 ou 4, **caractérisé en ce que** le profilé d'embrayage (110) comporte plusieurs éléments profilés d'embrayage (177) pour lesquels au moins un des éléments suivants s'applique :
les éléments profilés d'embrayage (177) ont une largeur variable (B177) sur la longueur, qui augmente en direction de la première partie d'embrayage (106),
les lignes de tête (Z110) des éléments profilés d'embrayage (177) forment une surface de lignes de tête, qui est cylindrique ou s'élargit de façon conique en direction de la première partie d'embrayage (106),
les éléments profilés d'embrayage (177) ont une hauteur variable (H177) sur la longueur, qui diminue en direction de la première partie d'embrayage (106).

6. Ensemble d'embrayage selon l'une quelconque des revendications 3 ou 5, **caractérisé en ce qu'**un flanc profilé (75, 75', 175, 175') d'un élément profilé d'embrayage (77, 177) forme dans la section cylindrique à travers le profilé d'embrayage (10, 110) avec une parallèle (P) à l'axe de rotation (A) un angle de flanc profilé (α75, α75'; α175, α175'), qui est supérieur à 1° et inférieur à 5°.

7. Ensemble d'embrayage selon l'une quelconque des revendications 1 à 6, **caractérisé en ce que** l'assemblage profilé (29, 129) en forme d'un assemblage d'arbre cannelé est structuré avec une denture d'arbre s'engrenant et une denture d'embrayage, sachant que la denture d'arbre et la denture d'embrayage comportent respectivement au moins une partie de surface conique.

8. Ensemble d'embrayage selon la revendication 6, **caractérisé en ce que** les premiers éléments d'engrènement (23, 123) de la première partie d'embrayage (6, 106) et les deuxièmes éléments d'engrènement (24, 124) de la deuxième partie d'embrayage (8, 108) s'engrènent entre eux dans la position de fermeture et sont en contact sur les surfaces d'engrènement (81, 81') pour la transmission de force en contact, sachant que les surfaces d'engrènement (81, 81'), vues en section transversale à travers les éléments d'engrènement, forment respectivement avec un plan longitudinal (E) contenant l'axe de rotation (A), un angle de surface d'engrènement (δ81, δ81'),
sachant qu'au moins un des angles de surface d'engrènement (δ81, δ81') est inférieur à au moins un des angles de flanc profilé (α75, α75').

9. Ensemble d'embrayage selon la revendication 8, **caractérisé en ce que** les premiers et deuxièmes éléments d'engrènement (23, 24;123, 124) sont respectivement structurés comme des dentures droites, qui sont constituées dans les surfaces frontales opposées de la première et de la deuxième partie d'embrayage (6, 8;106, 108),
sachant que pour au moins une des dentures droites (23, 24;123, 124) au moins un des éléments suivants s'applique :
les dents droites (79) de la denture droite (24, 124) ont une largeur variable (B79) sur la longueur, qui augmente radialement de l'intérieur vers l'extérieur,
les surfaces d'engrènement (81, 81') sont formées par les flancs de dent des dents droites (79), qui passent de façon angulaire l'une par rapport à l'autre, vues en section transversale à travers la denture droite (24, 124).

10. Ensemble d'embrayage selon l'une quelconque des revendications 1 à 9, **caractérisé en ce qu'**un frein (4) est prévu, avec lequel la deuxième partie de transmission (9) peut être freinée par rapport à un composant fixe (13), et
un dispositif d'actionnement (5) avec lequel l'embrayage (3) et le frein (4) peuvent être actionnés.

11. Ensemble d'embrayage selon la revendication 10, **caractérisé en ce que** le dispositif d'actionnement (5) comprend un mécanisme à rampe avec une première bague (35) axialement soutenue et une deuxième bague (36) axialement mobile, sachant que la deuxième bague (36) peut être déplacée axialement par rapport à la première bague (35), si la première et la deuxième bague (35, 36) sont tournées l'une par rapport à l'autre au moyen de la transmission (37), sachant que le dispositif d'actionnement (5) est structuré de telle manière qu'en partant d'une position de fin de course, dans laquelle la première bague (35) et la deuxième bague (36) sont axialement rapprochées l'une de l'autre, l'embrayage (3) est ouvert par la rotation relative de la première bague (35) vers la deuxième bague (36) dans une première zone de rotation et **en ce qu'**en poursuivant la rotation dans la même direction de rotation (R1) le frein (4) est fermé dans une deuxième zone de rotation.

12. Ensemble d'embrayage selon l'une quelconque des revendications 1 à 11, **caractérisé en ce que** la deuxième partie de transmission (109) est structurée sous la forme d'un carter de différentiel, qui peut être entraîné en rotation par une roue motrice (90) autour de l'axe de rotation (A), et
**en ce que** la première partie de transmission (107) est structurée sous la forme d'un support de différentiel, qui est disposé pouvant tourner dans le carter de différentiel (109) autour de l'axe de rotation (A),
sachant que l'embrayage (103) est disposé dans le chemin de puissance entre le carter de différentiel (109) et le support de différentiel (107) de telle manière qu'une transmission de couple du carter de différentiel (109) au support de différentiel (107) peut être établie ou interrompue sélectivement, sachant que la première partie d'embrayage (106) de l'embrayage (103) est reliée fermement au support de différentiel (107) et la deuxième partie d'embrayage (108) de l'embrayage (103) est maintenue solidaire en rotation et axialement mobile par rapport au carter de différentiel (109),
sachant qu'un dispositif d'actionnement est prévu pour actionner l'embrayage (103).

13. Ensemble d'embrayage selon la revendication 12, **caractérisé en ce que** la deuxième partie d'embrayage (108) comporte une section annulaire (98), qui est disposée dans le carter de différentiel (109) et plusieurs éléments de liaison (99), qui s'étendent axialement de la section annulaire (98) à travers les ouvertures dans le carter de différentiel (109) vers l'extérieur, sachant que le profilé d'embrayage (110) est formé sur une surface périphérique extérieure de la deuxième partie d'embrayage (108) et sachant que le profilé de transmission (120) est formé sur une surface périphérique intérieure du carter de différentiel (109).

14. Ensemble d'embrayage selon l'une quelconque des revendications 1 à 11, **caractérisé en ce qu'**un renvoi d'angle avec une couronne de différentiel (83) et un pignon conique (84) est prévu, qui sont en engrènement l'un avec l'autre pour la transmission du couple, sachant que la deuxième partie de transmission (9, 109) est reliée fermement à la couronne de différentiel (73) et est logée pouvant tourner de façon coaxiale à la première partie de transmission (9, 109).

15. Ensemble de chaîne cinématique de transmission (50) pour un véhicule automobile, comprenant :
une première chaîne cinématique de transmission pouvant être entraînée en permanence (52) avec un premier essieu moteur (53),
une deuxième chaîne cinématique de transmission pouvant être entraînée en option (54) avec un deuxième essieu moteur (55),
sachant que la deuxième chaîne cinématique de transmission (54) comprend un premier ensemble d'embrayage (2), un deuxième ensemble d'embrayage (102) et un arbre de transmission (64), qui est disposé dans le chemin de puissance entre le premier et le deuxième ensemble d'embrayage (2, 102), **caractérisé en ce qu'**au moins un du premier et du deuxième ensemble d'embrayage (2, 102) est structuré selon l'une quelconque des revendications 1 à 14.
